# EUROPEAN PATENT APPLICATION

(11) **EP 3 136 336 A1**
(43) Date of publication of application: **01.03.2017**
(21) Application number: 16185775.0
(22) Date of filing: 25.08.2016
(51) Int. Cl.: G06Q 50/00

(54) **ELECTRONIC PROCESSING SYSTEM WITH SOCIAL NETWORK AND METHOD OF OPERATION THEREOF**

(30) Priority: 27.08.2015 US 201562210823 P; 23.06.2016 US 201615190873
(71) Applicant: Sony Interactive Entertainment Network America LLC, San Mateo, CA 94404 (US)
(72) Inventor: Li, Ping, San Diego, CA California 92127 (US); Graziano, Dominic, San Diego, CA California 92127 (US)
(74) Representative: D Young & Co LLP

(57) **Abstract**

An electronic processing system, and a method of operation thereof, including: an entry module for providing an entry point for utilizing a community feature in a social gaming network; a community hub module, coupled to the entry module, for generating a community hub page of a community based on the entry point for presenting on a screen; a community profile module, coupled to the community hub module, for generating a community profile page of the community presented on the community hub page; and a registration module, coupled to the community profile module, for generating a registration request based on the community profile page for joining the community with a shared interest to play a game in the social gaming network.

## Description

### TECHNICAL FIELD

The present invention relates generally to an electronic processing system and more particularly to a system for electronic processing with social network.

### BACKGROUND ART

Social networking is a practice of expanding a number of one's business and/or social contacts by making connections through individuals. While social networking has gone on almost as long as societies have existed, an unparalleled potential of the Web to facilitate such connections has been recognized and exploited, through Web-based groups established for that purpose.

The world of the Internet is changing rapidly. Social networking allows the users to become increasingly comfortable with making a significant percentage of their purchases online. Over the past years, there has been a remarkable transformation in the kind of content available online. Video in both short form and long form is now readily available through multiple portals and platforms. However, electronic processing systems that support the social networking are currently still encountering problems due to lack of innovative solutions that effectively deliver quality of contents to target audiences.

Thus, a need still remains for an electronic processing system that delivers innovation and technological advances to enable the users to effectively share and efficiently distribute proper contents within social networks. In view of the increasing demand for such electronic processing systems, it is increasingly critical that answers be found to these problems. In view of the ever-increasing commercial competitive pressures, along with growing consumer expectations and the diminishing opportunities for meaningful product differentiation in the marketplace, it is critical that answers be found for these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

Various respective aspects and features of the invention are defined in the appended claims. Combinations of features from the dependent claims may be combined with features of the independent claims as appropriate and not merely as explicitly set out in the claims.

Embodiments of the present invention provides a method of operation of an electronic processing system including: providing an entry point for utilizing a community feature in a social gaming network; generating a community hub page of a community based on the entry point for presenting on a screen; generating a community profile page of the community presented on the community hub page; and generating a registration request based on the community profile page for joining the community with a shared interest to play a game in the social gaming network.

The embodiments of the present invention provides an electronic processing system, including: an entry module for providing an entry point for utilizing a community feature in a social gaming network; a community hub module, coupled to the entry module, for generating a community hub page of a community based on the entry point for presenting on a screen; a community profile module, coupled to the community hub module, for generating a community profile page of the community presented on the community hub page; and a registration module, coupled to the community profile module, for generating a registration request based on the community profile page for joining the community with a shared interest to play a game in the social gaming network.

Certain embodiments of the invention have other steps or elements in addition to or in place of those mentioned above. The steps or the elements can become apparent to those skilled in the art from a reading of the following detailed description when taken with reference to the accompanying drawings.

### BRIEF DESCRIPTION OF THE DRAWINGS

Embodiments of the invention will now be described with reference to the accompanying drawings, throughout which like parts are referred to by like references, and in which:
FIG. 1 is a system block diagram of an electronic processing system with a social network mechanism in an embodiment of the present invention.
FIG. 2 is a detailed block diagram of the electronic processing system.
FIG. 3 is a diagram with the entry points to the community hub module.
FIG. 4 is an example of a gallery view of the communities.
FIG. 5 is an example of a creation flow of the communities.
FIG. 6 is a first example of one of the community profile pages of the communities.
FIG. 7 is a second example of one of the community profile pages.
FIG. 8 is a third example of one of the community profile pages.
FIG. 9 is a fourth example of one of the community profile pages.
FIG. 10 is a fifth example of one of the community profile pages.
FIG. 11 is a sixth example of one of the community profile pages.
FIG. 12 is an example of one of the screens with the now playing option.
FIG. 13 is an example of one of the screens with the member list option.
FIG. 14 is an example of one of the member lists.
FIG. 15 is an example of one of the community discussion walls of the communities.
FIG. 16 is the create icon on the community profile pages.
FIG. 17 is an example of one of the screens for creation of the parties.
FIG. 18 is an example of one of the parties.
FIG. 19 is an example of the now playing page.
FIG. 20 is a configuration of the control settings of the communities.
FIG. 21 is an example of one of the screens for management of the control settings.
FIG. 22 is an example of one of the screens with the notifications.
FIG. 23 is an example of one of the screens with a grief report option.
FIG. 24 is an example of one of the screens for generation of the grief reports.
FIG. 25 is a detailed block diagram of the community hub module.
FIG. 26 is an example of the friend app.
FIG. 27 is an example of one of the screens for discovery of the communities based on the friend app.
FIG. 28 is an example of one of the screens for discovery of the communities based on the live details widget.
FIG. 29 is an example of one of the game titles.
FIG. 30 is an example of one of the screens for discovery of the communities based on the member profiles.
FIG. 31 is an example of one of the screens for discovery of the communities based on the now playing option.
FIG. 32 is an example of one of the screens for discovery of the communities based on the invitations.
FIG. 33 is a flow chart of a method of operation of an electronic processing system in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of the embodiments of the present invention.

In the following description, numerous specific details are given to provide a thorough understanding of the invention. However, it can be apparent that the invention may be practiced without these specific details. In order to avoid obscuring the embodiments of the present invention, some well-known circuits, system configurations, and process steps are not disclosed in detail.

The drawings showing embodiments of the system are semi-diagrammatic and not to scale and, particularly, some of the dimensions are for the clarity of presentation and are shown exaggerated in the drawing FIGs.

Where multiple embodiments are disclosed and described having some features in common, for clarity and ease of illustration, description, and comprehension thereof, similar and like features one to another can ordinarily be described with similar reference numerals. The embodiments have been numbered first embodiment, second embodiment, etc. as a matter of descriptive convenience and are not intended to have any other significance or provide limitations for the embodiments of the present invention.

The term "module" referred to herein can include software, hardware, or a combination thereof in the embodiments of the present invention in accordance with the context in which the term is used. For example, the software can be machine code, firmware, embedded code, and application software. Also for example, the hardware can be circuitry, processor, computer, integrated circuit, integrated circuit cores, a microelectromechanical system (MEMS), passive devices, environmental sensors including temperature sensors, or a combination thereof.

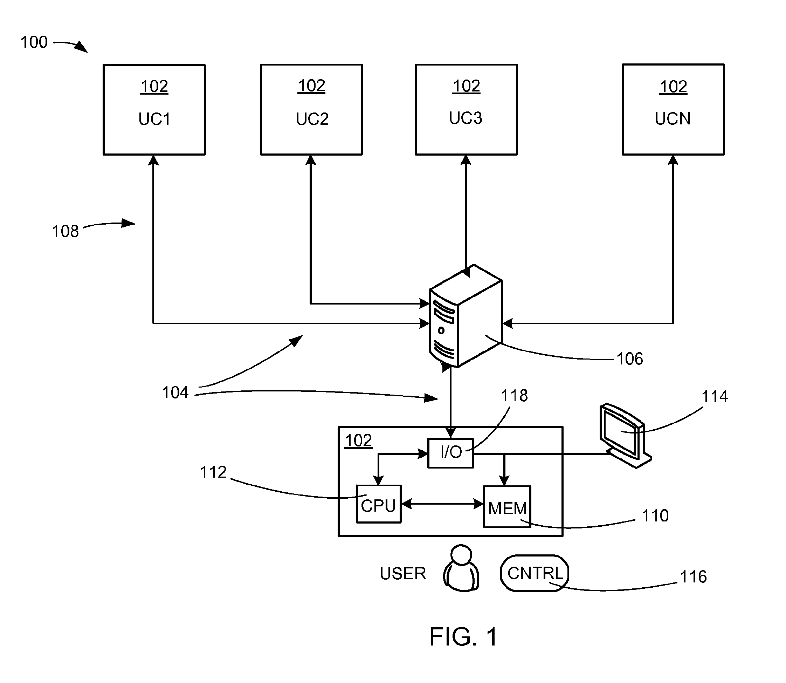

Referring now to FIG. 1, therein is shown a system block diagram of an electronic processing system 100 with a social network mechanism in an embodiment of the present invention. The system block diagram shows a plurality of game consoles 102 utilized by users in a social gaming network 104.

The game consoles 102 are devices that process information including video signals and visual images for video games. For example, the game consoles 102 can include PlayStation 4 (PS4) and any other video game consoles. Also for example, the game consoles 102 can include tablets, PlayStation Vita, handheld game consoles, or any other portable gaming devices.

The social gaming network 104 provides interconnections of platforms, systems, and applications for exchanging information. In the social gaming network 104, networked computing devices exchange data with each other using a data link between nodes that are established using either cable media or wireless media. For example, the social gaming network 104 can include a PlayStation Network (PSN) and any other gaming networks.

The users can engage in game plays or other activities. Information relating to such activities can be sent to a number of servers 106. The servers 106 are devices that manage access to a centralized resource or service in a network. The social gaming network 104 includes a number of user connections 108 (UC) between the game consoles 102 and the servers 106. The user connections 108 are the interconnections that provide communications mechanisms for exchanging information among the platforms, the systems, and the applications.

The electronic processing system 100 can include one or more of the servers 106 used for obtaining information relating to the activities of the users from the game consoles 102. The information relating to the activities of the user connections 108 is transmitted to a storage device 110 in each of the game consoles 102 for later presentation on a display.

For example, the activities can include game plays or any other actions or events of the users associated with the video games. Also for example, the storage device 110 can include volatile and nonvolatile memory devices.

The users can see all comments posted by the user connections 108. The comments and game shares including screen shots can be handled by a processor 112 of each of the game consoles 102. For example, the processor 112 can include a central processing unit (CPU) or any other computing devices.

Display devices 114 can be separate from the game consoles 102 or integrated within the game consoles 102. The display devices 114 output the video signals or the visual images for the video games.

Controllers 116 are devices that the users utilize with game or entertainment systems to manipulate or control the game consoles 102. The controllers 116 provide input to the video games to control objects or characters in the video games. The controllers 116 can be separate from the game consoles 102 or integrated within the game consoles 102. For example, the controllers 116 can include G-Shock controllers or any other control devices.

Each of the game consoles 102 includes an input/output unit 118 (I/O) for providing input and output functions or data transmission. The input/output unit 118 provides the data transmission between the game consoles 102 and the servers 106, the display devices 114, and the controllers 116.

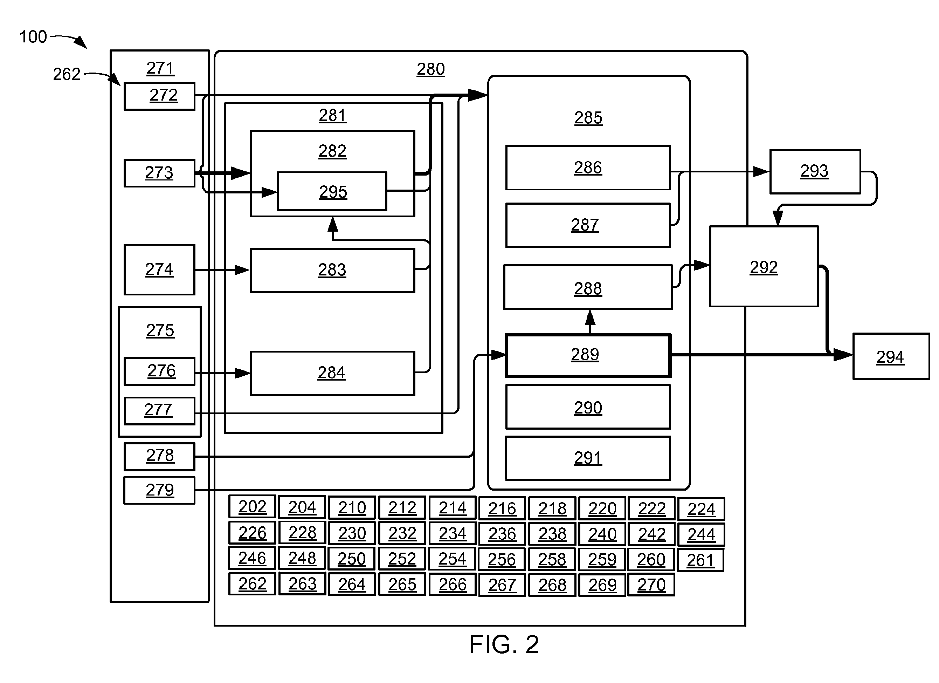

Referring now to FIG. 2, therein is shown a detailed block diagram of the electronic processing system 100. The electronic processing system 100 includes a flow of a community feature 202 in the electronic processing system 100. The community feature 202 is a mechanism of sharing information among communities of the users who have similar or shared interest 204. The shared interest 204 includes information that identifies the users of the community feature 202 of what the users like or prefer.

A current social graph employed in the social gaming network 104 of FIG. 1 can include millions of the game consoles 102 of FIG. 1 with the users who are isolated from each other on a platform of the game consoles 102 employed in the social gaming network 104. There may not exist a way for the users to meet and connect with each other in a meaningful and effective way. The block diagram shows a flow of an operation of the electronic processing system 100 employed in the social gaming network 104. For example, the social gaming network 104 can include a PlayStation Network (PSN).

Players or the users are currently connected as friends. The players already know each other from real life and so meet one another in games 210 played in the social gaming network 104. A large percentage of the players do not have friends, whom they already know.

In real life, the players connect with each other through various ways. For example, the players connect with each other when they play with each other in the games 210, when they share similar sill sets, when they are physically at the same location, or when they are in time zones 212 that are the same. The time zones 212 are geographical regions with uniform standard times for the users within the geographical regions to observe the same time.

Also for example, the players connect with each other when they use the same language or when they share similar identities. As a specific example, the similar identities can include age, gender, and reputation.

A number of the users with the shared interest 204 form communities 214. The communities 214 are self-organized by the users. The communities 214 are around or associated with the shared interest 204 and needs of the users.

The players with like minds or similar with each other can discover and join the communities 214 using the platform of the game consoles 102 in the social gaming network 104 whenever and wherever as appropriate based on control settings 216, which will be subsequently described below. As such, the players have happily found each other. The control settings 216 include information used as parameters or configurations employed for controlling access to the communities 214

For example, one of the communities 214 includes a Game X Hard-core Spanish Community that includes the players who are Spanish and want to play with other Spanish the users. Also for example, another of the communities 214 includes a Game A Beginner Share Play Community with the players who are novices in the games 210.

Further, for example, another of the communities 214 includes a Game Y1-Y7 Game Art sharing Community with the players who love arts. Further, for example, another of the communities 214 includes a Game Z U.S. Clan Recruitment Community organizes for specific the players of the games 210.

The embodiments of the present invention can employ the community feature 202 using the game consoles 102 in the social gaming network 104. The embodiments of the present invention can employ the community feature 202 in mobile devices and gaming software on the Web.

The community feature 202 can be utilized by or target the users using the game consoles 102 to create or join the communities 214. The users can create or join a predetermine number of the communities 214.

The communities 214 can include a predetermined number of members 218. For example, each of the communities 214 can have a maximum of the members 218 on the first day or Day 1 and then a member count 220 of the members 218 can incrementally increase by a predetermined number each day thereafter.

The community feature 202 can include a parental control 222 for management of the members 218 in the communities 214. The parental control 222 can be employed to control sub-accounts 224 so that the sub-accounts 224 cannot create the communities 214. The sub-accounts 224 identify login information of the players who are underage in the social gaming network 104 and thus would require supervision. The sub-accounts 224 would have to be invited by the members 218 of the communities 214 that are not restricted by the parental control 222 in order to join the communities 214.

The community feature 202 is entirely hidden from or non-accessible to the sub-accounts 224. The community feature 202 is non-accessible to the sub-accounts 224 from anywhere by way of friends' software applications, profiles, parties 228, what's new, and live details, as examples.

Notifications 230 from the communities 214 cannot be sent to the sub-accounts 224 if either a user-generated message flag 226 (UGM flag) or a chat/message flag of the parental control 222 is on. The notifications 230 are information generated and sent as messages to inform recipients regarding the communities 214 in the social gaming network 104.

Primary languages 232 used for the community feature 202 can include any human communication mechanism, either spoken or written, or a system of communication used by a particular community or a country. The primary languages 232 can be available in all geographical regions 234 or for localization of a particular geographical region, culture, or population. The primary languages 232 are the only communication mechanism employed by the members 218 of the communities 214 that are associated with the primary languages 232.

The community feature 202 can include game titles 236 of the games 210 applied to each of the communities 214. The game titles 236 are information that identifies the games 210. Each of the communities 214 can be associated with a number of the game titles 236. For example, each of the communities 214 can be associated with 0 to n of the game titles 236, where n is a counting number. The game titles 236 are information that indicates names of the games 210.

Within the geographical regions 234, the communities 214 that are associated with the game titles 236 are to respect or follow a regional age rating 238, which provides guidance as to ages that are appropriate to play a particular game. If the game titles 236 are not available in the geographical regions 234, the communities 214 associated with the game titles 236 can be hidden from or not accessible to the users in the geographical regions 234.

If the game titles 236 include a regional age limit 240 determined by the regional age rating 238 for the users, the communities 214 associated with the game titles 236 can be hidden from or not accessible to the users having ages below the regional age limit 240. The regional age limit 240 places a restriction on the users of predetermined ages in the geographical regions 234.

The games 210 that are the same can be mapped or grouped together, whereby the games 210 are from different ones of the geographical regions 234. The communities 214 associated with the games 210 that are the same can be visible or available for all of the different ones of the geographical regions 234. The users can be gated or qualified by their ages in the geographical regions 234.

The community feature 202 can include a global moderation mechanism. The global moderation mechanism provides a method to generate grief reports 242 for all user-generated message contents 244 (UGM contents) that the members 218 of the communities 214 in the social gaming network 104 create. The members 218 of the communities 214 can generate the grief reports 242 when the user-generated message contents 244 are inappropriate or noncompliant with rules that the members 218 agree to abide upon registration of memberships of the members 218.

The user-generated message contents 244 can then be processed using a profanity filter 246, which is information employed to prevent the user-generated message contents 244 that are inappropriate from being presented. The profanity filter 246 can be applied to select the user-generated message contents 244 that include information that may be obscene or not suitable for the users of the sub-accounts 224.

The community feature 202 can include management capabilities for the communities 214. Each of master accounts 248 can create a maximum number of the communities 214. The master accounts 248 are login information of the users who have the parental control 222 for management of the sub-accounts 224. For example, each of the master accounts 248 can create at most 5 of the communities 214.

The management capabilities can include community creators 250 and community moderators 252 with special rights to manage contents and the members 218 of the communities 214. The community feature 202 allows only one of the members 218 to be one of the community creators 250 of each of the communities 214. The community feature 202 allows a maximum number of the members 218 minus one as the community moderators 252 since one of the members 218 can be one of community owners.

In a first example, one of the users in the social gaming network 104 can block another of the users. As an example, let the users include A and B. If A blocks B, B cannot see and join one of the communities 214 that A as one of the community creators 250 has created. Invitations 254 from A as one of the community creators 250 to join the communities 214 that A has created may not be sent to B. The invitations 254 include information sent from a user to another user for the other user to review and register if interested to join the communities 214.

B can still see and join the communities 214 where A is one of the community moderators 252 or a regular member. The invitations 254 from the communities 214 can still be sent to B. B can be automatically blocked by A as one of the community creators 250 of one of the communities 214. B's membership status with one of the communities 214 can be terminated.

In a second example, if one of the communities 214 blocks or bans B from the communities 214, B's membership status with the communities 214 can be terminated. B cannot see and join the communities 214. The invitations 254 from the communities 214 may not be sent to B.

The community feature 202 includes a number of methods or mechanism for creation of or access to the communities 214. The community feature 202 includes the methods including a discovery method 256, an identification method 258, a notification method 259, a discussion method 260, and a management method 261.

The discovery method 256 determines and provides a variety of manners for access to the communities 214. The discovery method 256 includes recommendations from the users of the social gaming network 104 or the members 218 of the communities 214. The discovery method 256 includes a search tool to find the communities 214 of interest.

The discovery method 256 includes a variety of entry points 262 on the game consoles 102. The discovery method 256 includes options or tools to seek for or inquire about the communities 214 through friends, profiles, information about what's new (now playing), notifications, the parties 228, and the live details of the games 210 currently taking place.

The identification method 258 describes the communities 214. The identification method 258 includes information about identities of the communities 214. The identification method 258 provides community profile pages 263 of the communities 214.

The community profile pages 263 include specific information about the communities 214 including unique names 264, community profile pictures 265, community background images 266, the time zones 212, the primary languages 232, community descriptions 267, the game titles 236, and member lists 268. The game titles 236 include information that identifies the games 210. The game titles 236 are associated with the communities 214 that are created to discuss or involve with the games 210 with the game titles 236.

The notification method 259 generates information or messages about the communities 214 that have been created. The discussion method 260 provides a communication mechanism for the users to share about the communities 214 and activities within the communities 214. The activities are actions or events that have occurred within the communities 214.

The discussion method 260 includes community discussion walls 269, which are forums where information is shared among the members 218. The community discussion walls 269 provide communication on views of the games 210. The discussion method 260 is available through the parties 228 and open-sessions 270 among the members 218 of the communities 214.

The management method 261 includes controls operations of the communities 214 and the control settings 216 of the communities 214, the master accounts 248, and the sub-accounts 224. The management method 261 is available to the community owners or the community creators 250 and the community moderators 252. The management method 261 provides moderation rights to the community creators 250 and the community moderators 252.

The block diagram shows the operation of the community feature 202 employed in the electronic processing system 100. The electronic processing system 100 includes an entry module 271. The entry module 271 includes a notification functional area module 272, a friend functional area module 273, a content launcher module 274, and a profile functional area module 275 having member profiles 276 and other user profiles 277. The entry module 271 includes a now playing module 278 and a party functional area module 279.

The electronic processing system 100 includes a community feature module 280 having a community hub module 281. The community feature module 280 supports the community feature 202 for sharing information among the users who have the shared interest 204. The entry points 262 provide methods of accessing the communities 214 through the community hub module 281.

The community hub module 281 includes a main hub module 282, a game-focused hub module 283, and a user-focused hub module 284. The community feature module 280 includes a community profile module 285. The community profile module 285 can generate the community profile pages 263. The community profile module 285 can configure the control settings 216 including the parental control 222.

The community profile module 285 includes a wall module 286, a list module 287, and a party module 288. The community profile module 285 includes a play module 289, a setting module 290, and an invitation module 291. The community feature module 280 includes a registration module 292.

The setting module 290 can configure the user-generated message flag 226 of the parental control 222 to control the sub-accounts 224. The registration module 292 can enable the users or the members 218 to submit requests to join the parties 228 in the communities 214.

The electronic processing system 100 includes a send message module 293, and a start gameplay module 294. The main hub module 282 can include a create module 295 for creating the communities 214.

The entry module 271, the notification functional area module 272, the friend functional area module 273, the content launcher module 274, and the profile functional area module 275 can be implemented with hardware units in the electronic processing system 100. For example, the entry module 271, the notification functional area module 272, the friend functional area module 273, the content launcher module 274, and the profile functional area module 275 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

The now playing module 278, the party functional area module 279, the community feature module 280, the community hub module 281, and the main hub module 282 can be implemented with hardware units in the electronic processing system 100. For example, the now playing module 278, the party functional area module 279, the community feature module 280, the community hub module 281, and the main hub module 282 can be implemented with the game consoles 102, the social gaming network 104, the servers 106, the user connections 108, the storage device 110, the processor 112, the display devices 114, the controllers 116, the input/output unit 118, or a combination thereof.

The game-focused hub module 283, the user-focused hub module 284, and the community profile module 285 can be implemented with hardware units in the electronic processing system 100. For example, the game-focused hub module 283, the user-focused hub module 284, and the community profile module 285 can be implemented with the game consoles 102, the social gaming network 104, the servers 106, the user connections 108, the storage device 110, the processor 112, the display devices 114, the controllers 116, the input/output unit 118, or a combination thereof.

The wall module 286, the list module 287, the party module 288, the play module 289, and the setting module 290 can be implemented with hardware units in the electronic processing system 100. For example, the wall module 286, the list module 287, the party module 288, the play module 289, and the setting module 290 can be implemented with the game consoles 102, the social gaming network 104, the servers 106, the user connections 108, the storage device 110, the processor 112, the display devices 114, the controllers 116, the input/output unit 118, or a combination thereof.

The invitation module 291, the registration module 292, the send message module 293, and the start gameplay module 294 can be implemented with hardware units in the electronic processing system 100. For example, the invitation module 291, the registration module 292, the send message module 293, and the start gameplay module 294 can be implemented with the game consoles 102, the social gaming network 104, the servers 106, the user connections 108, the storage device 110, the processor 112, the display devices 114, the controllers 116, the input/output unit 118, or a combination thereof.

The entry module 271 can be coupled to the community feature module 280. The community feature module 280 can be coupled to the registration module 292, the send message module 293, and the start gameplay module 294. The registration module 292 can be coupled to the send message module 293. The registration module 292 can be coupled to the start gameplay module 294.

It has been discovered that the community feature 202 improves interaction among the users of the social gaming network 104 by quickly connecting the users having the shared interest 204 on the social gaming network 104 to play the games 210. The communities 214 allow the users the members 218 can connect, play, and share with each other in the communities 214.

It has also been discovered that the community feature 202 improves social engagement on the game consoles 102 by connecting the players who are like-minded.

It has further been discovered that the user-generated message contents 244 improves communication among the users. The members 218 in the social gaming network 104 create the user-generated message contents 244 so that the communities 214 are aware of what's new or trending in the social gaming network 104 and thus providing opportunities for the players to discover great contents.

It has further been discovered that the shared interest 204 enables isolated players to have a good selection of the games 210 to play and engage well with each other even in different time zones.

It has further been discovered that the regional age limit 240 improves the technology for providing tools for parents to control unwanted content and also for providing a safe Internet for families. The regional age limit 240 prevents the game titles 236 from being accessible to the users having ages below the regional age limit 240.

It has further been discovered that the parental control 222 improves the technology for providing tools for parents to control unwanted content. The parental control 222 prevents the sub-accounts 224 from creating or participating in the communities 214 that may be inappropriate for the players who are underage in the social gaming network 104.

It has further been discovered that the user-generated message flag 226 provides a safe environment for underage players by preventing the players from receiving the notifications 230.

It has further been discovered that the profanity filter 246 applied to the user-generated message contents 244 improves the technology for providing a safe Internet for families. The profanity filter 246 prevents presentation of the user-generated message contents 244 that are inappropriate for viewing by the underage players of the sub-accounts 224.

It has further been discovered that the grief reports 242 generated for the user-generated message contents 244 improves the technology for providing a safe Internet for families. The grief reports 242 prevent the user-generated message contents 244 from being presented to the underage players of the sub-accounts 224.

It has further been discovered that the community creators 250 and the community moderators 252 of the communities 214 improves the technical field of providing a safe internet environment for families. The community creators 250 and the community moderators 252 monitor membership/ownership rights in the communities 214 and block/unblock the members 218 from access to inappropriate contents.

It has further been discovered that the user-generated message contents 244 provide a safe internet environment for families. The user-generated message contents 244 are filtered so that only appropriate contents are presented to the members 218 in the communities 214. All of the user-generated message contents 244 including the unique names 264, the community descriptions 267, the community profile pictures 265, and the notifications 230 are filtered or reviewed for profanity and removed as appropriate.

It has further been discovered that the community profile pages 263 improves content sharing among the members 218 of the communities 214. The community profile pages 263 present the message-board for the notifications 230 and the community discussion walls 269 to enable the content sharing.

It has further been discovered that the community profile pages 263 improves content sharing among the members 218 of the communities 214. The community profile pages 263 include the now playing page 712 to enable the members 218 to start the parties 228 and the open-sessions 270 of the games 210 associated with the communities 214 for other players in the social gaming network 104 to join the communities 214 with the registration requests 2102.

It has further been discovered that the community feature 202 enable gamers to create, manage, and be involved in the communities 214 associated with the game titles 236, wherein the members 218 of the communities 214 connect, play, and exchange the shared contents 2110 associated with the game titles 236 related to the communities 214.

It has further been discovered that the community creators 250 of the game consoles 102 are able to easily share and play with the players who agree with the shared interest 204. The community creators 250 establish the shared interest 204 with the members 218 of the communities 214. The community creators 250 quickly play the games 210 after the communities 214 are established, which are not provided by online gaming websites.

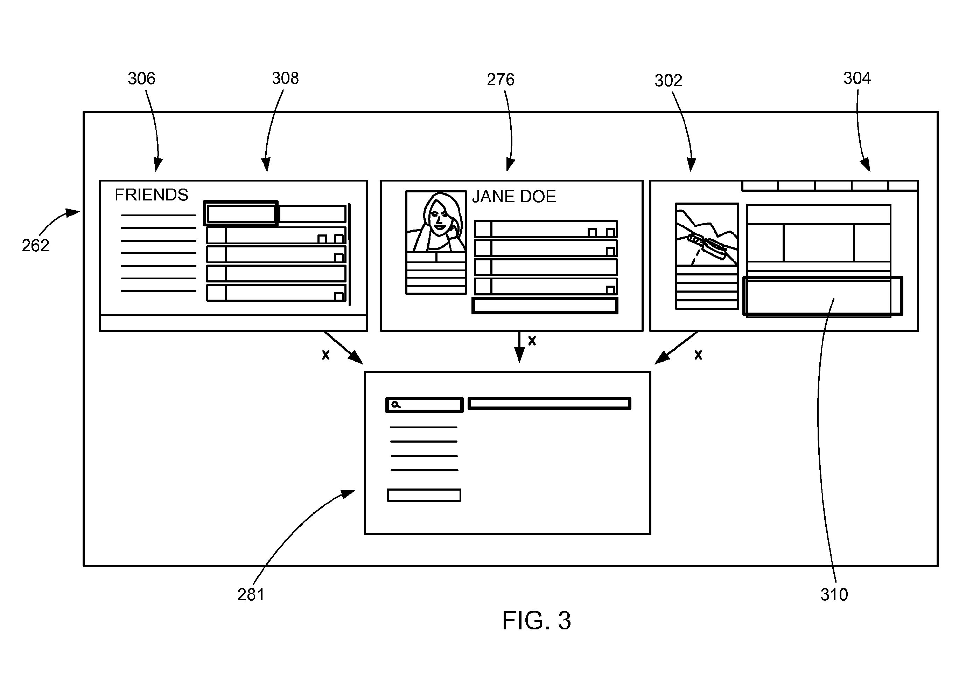

Referring now to FIG. 3, therein is shown a diagram with the entry points 262 to the community hub module 281. The entry points 262 are provided by the entry module 271 of FIG. 2 so that the community feature 202 of FIG. 2 can be utilized in the social gaming network 104 of FIG. 1.

The entry points 262 employ a new information tile 302, a live details widget 304, a friend app 306, and the member profiles 276 of FIG. 2. The entry points 262 can be utilized by the discovery method 256 of FIG. 2. The new information tile 302 includes information about what's new in the social gaming network 104.

Through a "What's New" menu on the game consoles 102 of FIG. 1, the users can determine what friends or the members 218 of FIG. 2 of the social gaming network 104 are currently doing. The live details widget 304 is a software application that presents information about the games 210 of FIG. 2 that are currently played or the activities that are currently participated by the members 218 in the social gaming network 104.

The users can find out about the communities 214 of FIG. 2 through the friend app 306 and the member profiles 276. The friend app 306 is software that provides a particular function to the users. The member profiles 276 include information particularly about the members 218 of the communities 214. The profile functional area module 275 of FIG. 2 can include the friend app 306.

The friend app 306 can be included or executed on the game consoles 102. The friend app 306 provides a capability for the users to search for friends and find out information about the friends and the friend's preferences and the activities associated with the communities 214 of which the friends are active the members 218.

The users can perform searches of the communities 214. The communities 214 can be searched by the unique names 264 of FIG. 2 of the communities 214, through friends' profiles or the member profiles 276, and the game titles 236 of FIG. 2. The communities 214 can include the communities 214 that the users have created. The communities 214 can include the communities 214 that the users have joined and thus are the members 218. The communities 214 can include the communities 214 that friends have created or joined.

The communities 214 can include those that are currently trending or are discussed the most among all of the communities 214. The communities 214 can be trending when the communities 214 have the most number of the members 218. The communities 214 can be trending based on a predetermined period. For example, the communities 214 that are determined to be trending because within a week, the member count 220 of FIG. 2 of the members 218 of the communities 214 is greater than a predetermined member threshold.

Information about the communities 214 can be presented on screens 308 of the display devices 114 of FIG. 1. The screens 308 are flat panels or areas on electronic devices including a television, a computer, or a smartphone, on which multimedia information are displayed. The parties 228 of FIG. 2 can be held in party rooms by way of on web pages presented on the screens 308, where the members 218 exchange information related to the game titles 236.

The information about the communities 214 can be presented by the friend app 306, the member profiles 276, the live details widget 304, or a combination thereof. The friend app 306 provides an option or a menu for the users to select to discover all of the communities 214 that the friends of the users have joined. The member profiles 276 provide an option or a menu for the user to select to view all of the communities 214 of which the friends of the users are the members 218.

The live details widget 304 presents community tiles 310 of the communities 214. The community tiles 310 include information about the communities 214. The community tiles 310 can include the specific information previously described about the communities 214 including the unique names 264, the community profile pictures 265 of FIG. 2, the community background images 266 of FIG. 2, and the time zones 212 of FIG. 2, as examples.

After the entry points 262 are presented and the users make appropriate selections on the screens 308, the users can view options on the screens 308 for the users to perform additional operations for the communities 214. The options are presented by the community hub module 281, which is linked or connected to the entry points 262 in the social gaming network 104.

The users can search to discover the communities 214 based on the unique names 264 or the game titles 236. The users can also start to create the communities 214. The unique names 264 are unique because there cannot be more than one of the communities 214 with the same name.

It has been discovered that the entry points 262 improves interaction among the players in the social gaming network 104 because the entry points 262 provide access to the communities 214 with other players with similar interests using the new information tile 302, the live details widget 304, the friend app 306, and the member profiles 276.

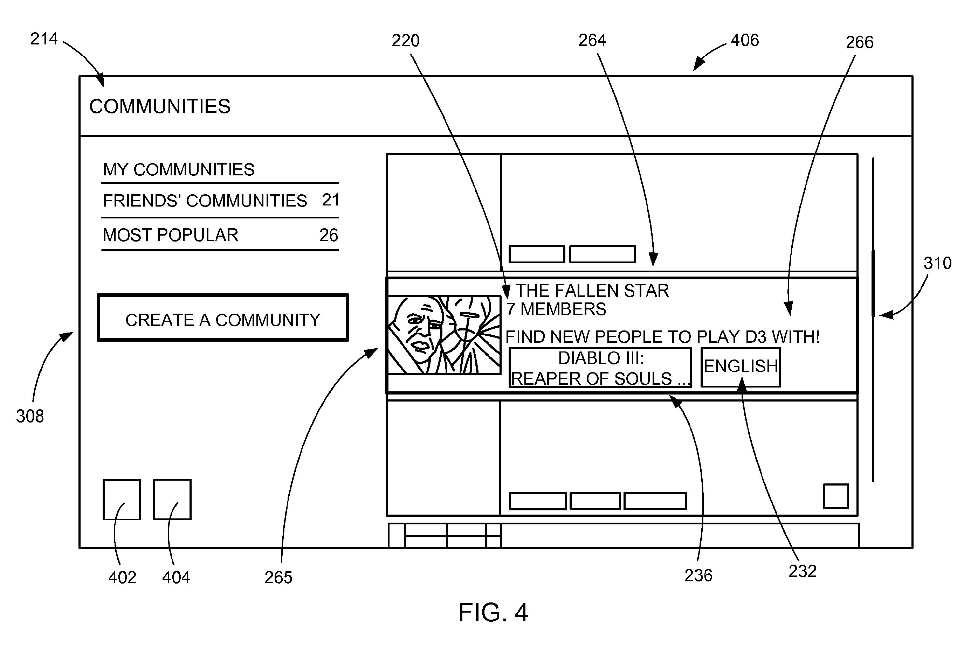

Referring now to FIG. 4, therein is shown an example of a gallery view of the communities 214. The gallery view can be presented by the community hub module 281 of FIG. 2. The community hub module 281 can provide options or menus on the screens 308 for the users to select to view the communities 214 of which the users are the members 218 of FIG. 2.

The users can select to view the communities 214 that the friends have joined. The community hub module 281 can present a number of the communities 214 that the friends have joined.

The users can also view the communities 214 that are trending. The communities 214 can be determined as trending communities. For example, one of the communities 214 can be determined to be a trending community when the one of the communities 214 has the highest number of the members 218 joined within the predetermined period among all of the communities 214. The community hub module 281 can provide an option for the users to create the communities 214.

The master accounts 248 of FIG. 2 on the game consoles 102 of FIG. 1 can create up to any number of the communities 214. For example, the master accounts 248 can create up to 5 of the communities 214. The sub-accounts 224 of FIG. 2 cannot create any of the communities 214.

The users can input or enter information associated with the communities 214. The users can enter the unique names 264 for the communities 214. The users can enter privacy setting options 402 in the control settings 216 of FIG. 2 of the communities 214.

The privacy setting options 402 can be set or configured to determine if the communities 214 are joinable by anyone or any of the users. The privacy setting options 402 can be set or configured to determine if the communities 214 are joinable only upon request. The privacy setting options 402 can be disabled for sharing the communities 214.

The users can optionally enter the game titles 236 that are associated with the communities 214. For example, each of the communities 214 can be associated with 0 to n of the game titles 236, where n is a counting number.

The users can optionally provide or select the community profile pictures 265 of the communities 214. The community profile pictures 265 are photographs or images that represent the communities 214. The users can optionally enter the community background images 266 of the communities 214. For each of the community background images 266, the users can select any image from screenshots, crop the image, and set the cropped image as a background of one of the communities 214.

The users can optionally enter the primary languages 232 to be used as the dominant languages by the members 218 of the communities 214 to which the primary languages 232 are assigned or associated. The users can optionally enter the time zones 212 of FIG. 2. The users can optionally enter mission statements 404 of the communities 214. The mission statements 404 include information about goals or purposes of the communities 214.

The unique names 264, the privacy setting options 402, the game titles 236, the community profile pictures 265, the community background images 266, the primary languages 232, the time zones 212, and the mission statements 404 are the user-generated message contents 244 of FIG. 2. All of the user-generated message contents 244 (UGC) can be reportable by the grief reports 242 of FIG. 2 generated by the members 218 of the communities 214.

The user-generated message contents 244 can be generated, created, processed, or reviewed by the community profile module 285 of FIG. 2. The grief reports 242 can be generated by the community profile module 285.

FIG. 4 shows the example of community hub pages 406 presented on the screens 308 for the communities 214. The community hub pages 406 are presented as a center where all of the communities 214 of interest can be found in the social gaming network 104 of FIG. 1. On the left side of the screens 308, different categories are shown. The community hub pages 406 of the communities 214 can be generated by the community hub module 281 based on the entry points 262 of FIG. 2.

One of the categories is shown at the top left corner of the screens 308 is "My Communities". "My Communities" is a category or an option for the users to select to show the communities 214 of which the users are the members 218 shown on the right side of the screens 308. Below "My Communities" is "Friends' Communities", which are the communities 214 that the friends of the users have joined but the users have not joined yet.

Below "Friends' Communities" is "Trending", which are the communities 214 that have more or most of the members 218 compared to the rest of the communities 214. The communities 214 that are trending can be determined based on at least a predefined number of the members 218. The communities 214 that are trending can be determined based on a rate of enrollment greater than an enrollment threshold in a predetermined duration.

For example, the predetermined duration can include any number of minutes, hours, days, weeks, months, or any other duration. Also for example, the communities 214 that are trending can include the top 10 percent of all of the communities 214 with the highest numbers of the members 218.

The users can create the communities 214 on their own. Each of the community tiles 310 on the right side of the screens 308 represents one of the communities 214. The community profile pictures 265 shown on the left sides of the community tiles 310 are associated with the communities 214. The unique names 264 of the communities 214 are shown at the top sides of the community tiles 310.

Also shown in each of the community tiles 310 are the member count 220 of the members 218 in each of the communities 214 as well as a notice of whether an active session is happening in each of the communities 214. The community descriptions 267 of FIG. 2 of the communities 214 can be shown below the unique names 264 to provide information about the communities 214.

The games 210 of FIG. 2 that the communities 214 are associated with can be shown below the community descriptions 267. The primary languages 232 and the time zones 212 are preferences to be used for the communities 214. The community profile pictures 265 can be shown in the right lower corner of each of the community tiles 310. The community profile pictures 265 can include thumbnail pictures.

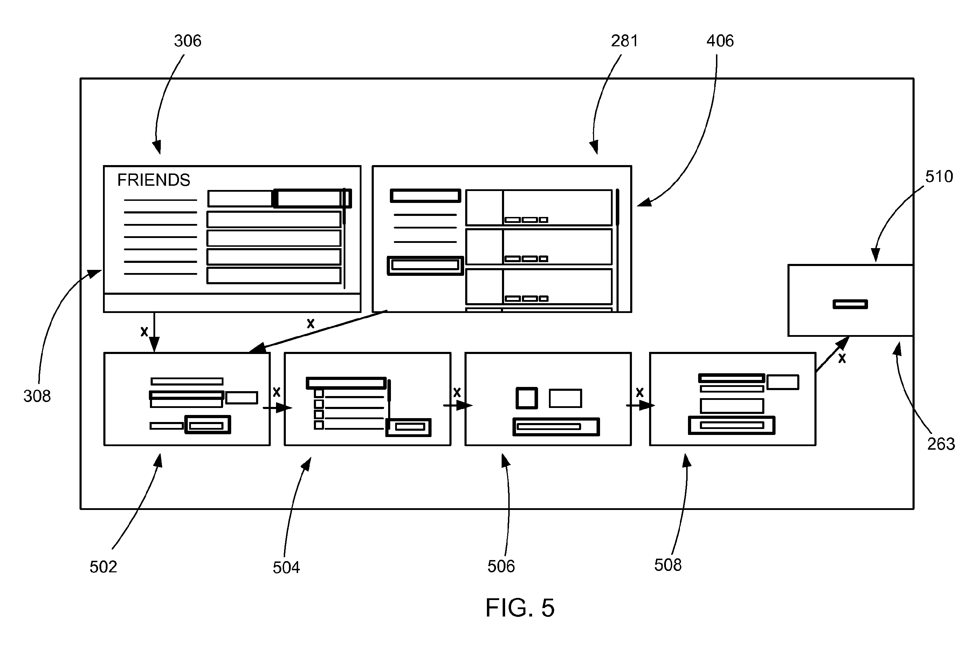

Referring now to FIG. 5, therein is shown an example of a creation flow of the communities 214 of FIG. 2. The creation flow is for registration of the communities 214. Creation of the communities 214 can be initiated using a button or a menu presented by the friend app 306. Creation of the communities 214 can be initiated using the community hub pages 406 presented by the community hub module 281 as previously described in FIG. 4. Then, the users can enter the creation flow.

As shown in step 1, a first creation module 502 enables the users to enter the unique names 264 of FIG. 2 and the privacy setting options 402 of FIG. 4. The privacy setting options 402 include permissions for sharing of the communities 214. The privacy setting options 402 configure the communities 214 are joinable by of any the users or joinable only upon request.

As shown in step 2, a second creation module 504 enables the users to associate the communities 214 with the game titles 236 of FIG. 2. As shown in step 3, a third creation module 506 enables the users to select or provide the community profile pictures 265 of FIG. 2 of the communities 214 and the community background images 266 of FIG. 2 of the communities 214 on the screens 308 viewed by the users as the users exchange or process information associated with the communities 214.

As shown in step 4, a fourth creation module 508 enables the users to select the time zones 212 of FIG. 2 and the primary languages 232 of FIG. 2. The fourth creation module 508 enables the users to enter the mission statements 404 of FIG. 4 about the communities 214. Then, a fifth creation module 510 presents the community profile pages 263 of the communities 214.

The first creation module 502, the second creation module 504, the third creation module 506, the fourth creation module 508, and the fifth creation module 510 can be implemented with hardware units in the electronic processing system 100. For example, the first creation module 502, the second creation module 504, the third creation module 506, the fourth creation module 508, and the fifth creation module 510 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

The community hub module 281 can be coupled with the first creation module 502. The first creation module 502 can be coupled with the second creation module 504. The second creation module 504 can be coupled with the third creation module 506. The third creation module 506 can be coupled with the fourth creation module 508. The fourth creation module 508 can be coupled with the fifth creation module 510.

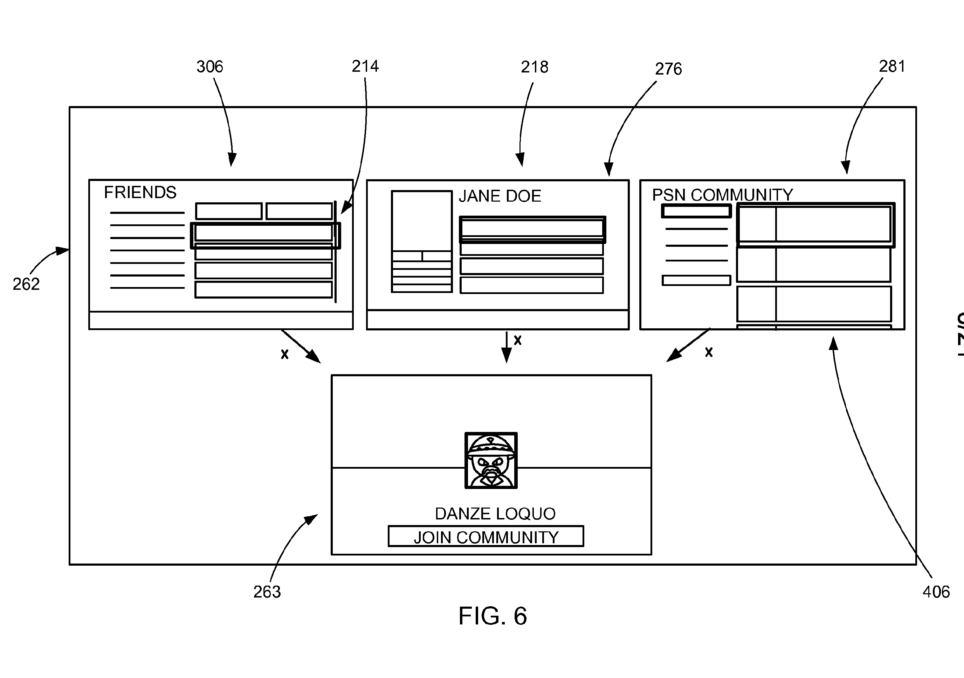

Referring now to FIG. 6, therein is shown a first example of one of the community profile pages 263 of the communities 214. The example shows the entry points 262 to the community profile pages 263.

The users can enter, access, or get into the communities 214 through the community profile pages 263. The community profile pages 263 can be viewed after the users select the option or the menu in the friend app 306, the member profiles 276, or the community hub pages 406 presented by the community hub module 281.

The friend app 306 provides the capability for the users to find out information about the friends and the friend's preferences and the activities associated with the communities 214. The users can perform searches of the communities 214 through the member profiles 276 of the members 218 of the communities 214.

If the users go through or view the community hub pages 406 and then the member profiles 276, the users can view all of the communities 214 that the friends or the other the members 218 have joined. This would be possible if a privacy mode of the privacy setting options 402 of FIG. 4 is not set or enabled to be private or by the invitations 254 of FIG. 2 only. The invitations 254 can be generated and sent by the invitation module 291 of FIG. 2.

A list of the communities 214 that are associated with the games 210 of FIG. 2 can also be displayed. The communities 214 can also be presented on the community hub pages 406. After the users select the communities 214 using the friend app 306, the member profiles 276, or the community hub pages 406, the users can view the community profile pages 263 that are linked or connected to the friend app 306, the member profiles 276, or the community hub pages 406.

If the users come in or view the community profile pages 263 through the friend app 306, the users have an ability to discover the communities 214. The community hub module 281 shows the communities 214 that are trending.

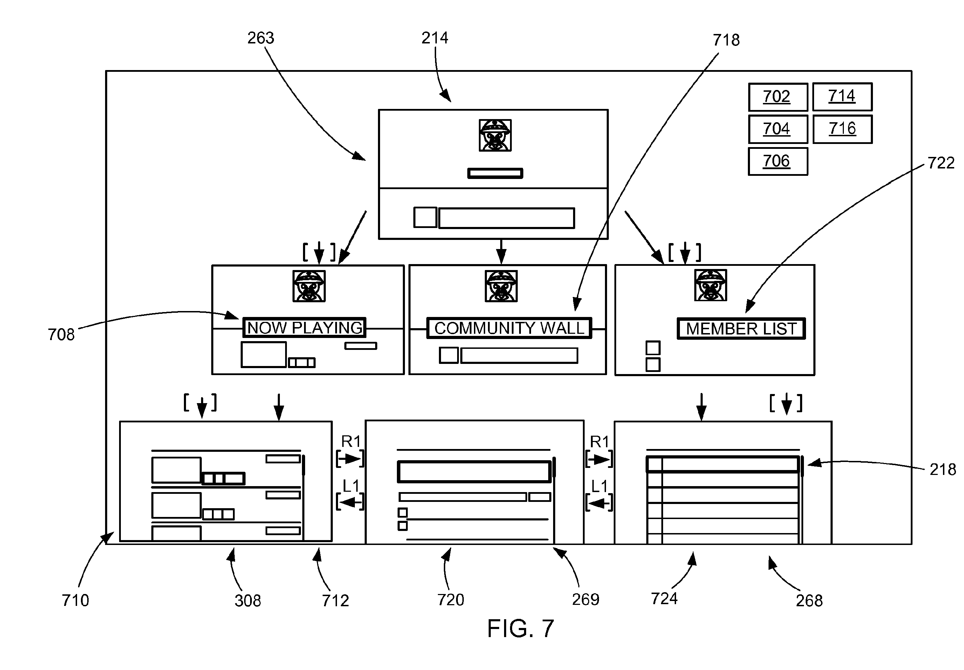

Referring now to FIG. 7, therein is shown a second example of one of the community profile pages 263. The first example shows an interaction process that can be utilized by the users to view additional information about the communities 214.

Each of the community profile pages 263 can include a message of a day 702, which is information associated with the communities 214. The message of the day 702 serves as an announcement board for the communities 214. The message of the day 702 can be posted or updated for each of the communities 214.

The message of the day 702 can be posted as often as needed when there are new messages that the members 218 wants to provide. Only the community creators 250 of FIG. 2 and the community moderators 252 of FIG. 2 can post into the message of the day 702. The members 218 can view the message of the day 702.

Each of the community profile pages 263 can include a section for a general discussion 704, which includes information that the members 218 provide about the communities 214. The general discussion 704 can be presented on the community discussion walls 269 where all of the members 218 can post. The members 218 can attach one of screenshots 706 per post from a capture gallery of images. All of the user-generated message contents 244 of FIG. 2 can be reportable by the grief reports 242 of FIG. 2.

The users can press down on a menu or one of the buttons on each of the community profile pages 263 to select a now playing option 708 to see or view a full screen 710 of a now playing page 712 presented by the now playing module 278 of FIG. 2. The communities 214 can have or hold the parties 228 of FIG. 2 in the communities 214.

The users can start the parties 228 from the community profile pages 263, and the parties 228 can be automatically associated with community identifications 714 (ID) of the communities 214. The parties 228 can be discoverable and joinable by all of the members 218 of the communities 214. The parties 228 can be created by the party module 288 of FIG. 2.

Each of the community profile pages 263 can include a section for the open-sessions 270 of FIG. 2. If the communities 214 are associated with the game titles 236 of FIG. 2, the open-sessions 270 from the games 210 of FIG. 2 having the game titles 236 can be discoverable and joinable by all of the members 218 of the communities 214.

The parties 228 are an existing console feature that provides a voice chat and text chat grouping of the players that is designed to make communication more effective. Community parties or the parties 228 are integrated with the community feature 202 of FIG. 2. The community feature 202 allows a specific community to have the parties 228, which appear in a Now Playing section of the community profile pages 263.

Any of the members 218 can see the parties 228 and join the parties 228 if there is room or available. The open-sessions 270 are a feature that allows gameplay information to be displayed to the other players on the social gaming network 104 of FIG. 1, and when viewing a player's open session, the users are given options to participate in a gameplay with that player. The communities 214 can show the open-sessions 270 for all of the members 218 who are playing the games 210, which are associated with that community to be displayed in the Now Playing Section.

All of the members 218 in the communities 214 can be visible to each other on member profile pages 716. The member profile pages 716 present the member profiles 276 of FIG. 2 of the members 218 in the communities 214.

The community profile pages 263 can present the unique names 264 of FIG. 2 of the communities 214 at the top sides of the screens 308. The community profile pages 263 can identify who the community creators 250 are.

The users can press down on a menu or one of the buttons on each of the community profile pages 263 to select a discussion wall option 718 to see or view the full screen 710 of a discussion wall page 720 that presents the community discussion walls 269. The users can press down on a menu or one of the buttons on each of the community profile pages 263 to select a member list option 722 to see or view the full screen 710 of a member list page 724 that presents the member lists 268 of the members 218 who have joined each of the communities 214.

For example, the users can press a button, depicted as R1, on a game control device to transition from the now playing page 712 to the discussion wall page 720, and from the discussion wall page 720 to the member list page 724. Also for example, the users can press another button, depicted as L1, on the game control device to transition from the member list page 724 to the discussion wall page 720, and from the discussion wall page 720 to the now playing page 712.

It has been discovered that the user-generated message contents 244 provide a safe internet environment for families. The user-generated message contents 244 are filtered so that only appropriate contents are presented to the members 218 in the communities 214. All of the user-generated message contents 244 including the screenshots 706 posted on the community discussion walls 269 are filtered or reviewed for profanity and removed as appropriate.

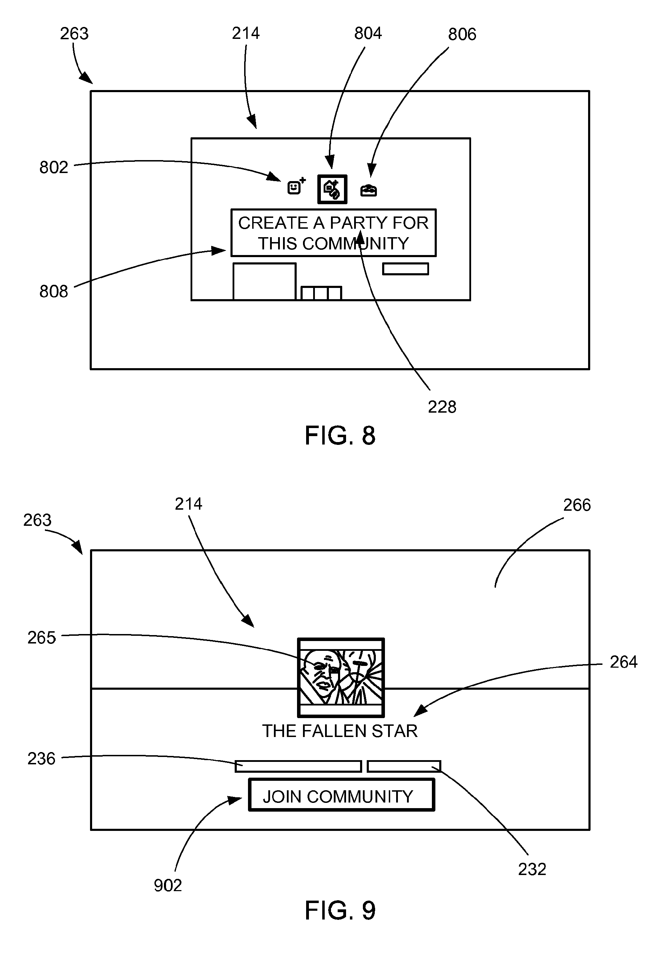

Referring now to FIG. 8, therein is shown a third example of one of the community profile pages 263. The second example shows an interaction process that can be utilized by the users to perform additional functions for the communities 214.

The users can select an invite icon 802 on one of the community profile pages 263 to invite the players to join the communities 214. The users can select a create icon 804 on one of the community profile pages 263 to create the parties 228. The users can select a set icon 806 on one of the community profile pages 263 to set or configure the privacy setting options 402 of FIG. 4 related to the communities 214.

As the users highlight the invite icon 802, the create icon 804, or the set icon 806, help messages 808 are presented. The help messages 808 includes information about functions of the invite icon 802, the create icon 804, or the set icon 806. For example, the help messages 808 can be presented below each of the invite icon 802, the create icon 804, and the set icon 806.

It has been discovered that the help messages 808 improve a user interface for the members 218 of FIG. 2. The user interface is improved because the help messages 808 make it easier for the users to know about the functions of the invite icon 802, the create icon 804, and the set icon 806.

Referring now to FIG. 9, therein is shown a fourth example of one of the community profile pages 263. The community profile pages 263 can include the unique names 264, the community profile pictures 265, and the community background images 266, the primary languages 232, the community descriptions 267 of FIG. 2, and the game titles 236. The community profile pages 263 can include a join community option 902 to enable the users to become the members of the communities 214.

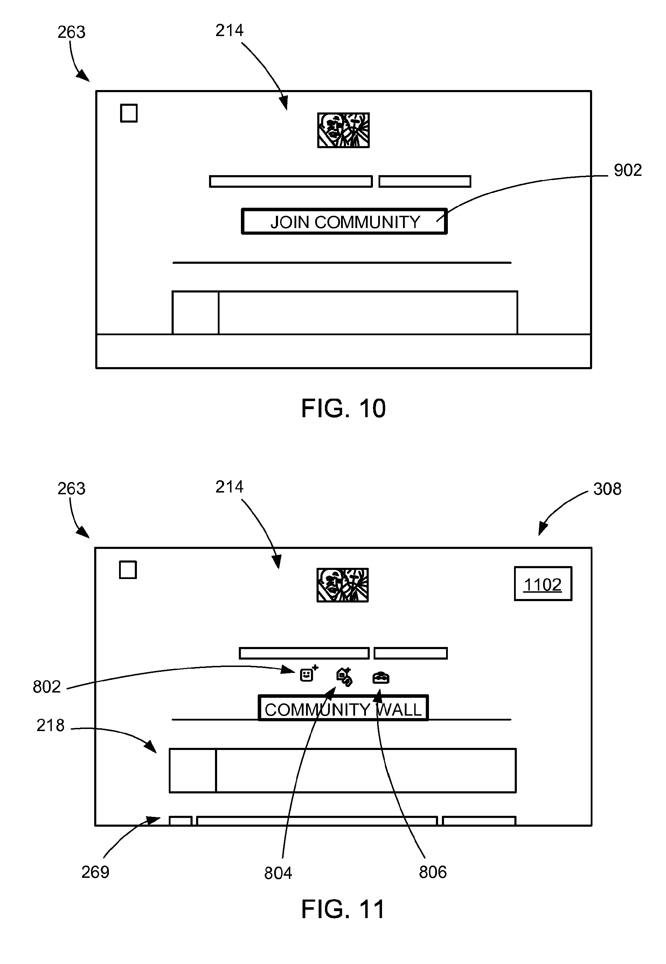

Referring now to FIG. 10, therein is shown a fifth example of one of the community profile pages 263. The community profile pages 263 can include the message of the day 702 of FIG. 7 presented below the presentation of the join community option 902. The message of the day 702 can be posted by any of the members of the communities 214. For example, the message of the day 702 can be posted by the community creators 250 of FIG. 2.

Referring now to FIG. 11, therein is shown a sixth example of one of the community profile pages 263. The community profile pages 263 can include the community discussion walls 269. The community discussion walls 269 are forums for the members 218 in the communities 214 to exchange information with each other.

The community discussion walls 269 provide methods of synchronous communication among the members 218 of the communities 214. The communication provides a mechanism for the members 218 of the communities 214 to communicate interactively and synchronously at the same time.

After one of the members 218 joins one of the communities 214, the member count 220 of FIG. 2 of the members 218 increases by one. The upper left corner of the screens 308 can indicate the community creators 250 of FIG. 2 of the communities 214. The upper right corner of the screens 308 can present "Member" to indicate that the users are the members 218 of the communities 214.

The community profile pages 263 can include the invite icon 802, the create icon 804, and the set icon 806 below titles or the unique names 264 of FIG. 2 of the communities 214. As the members 218, the users can utilize the invite icon 802 to add or invite people or the users to join the communities 214. The users can utilize the create icon 804 to create the parties 228 of FIG. 2 in the communities 214 with the members 218 of the communities 214 and only the members 218 of the communities 214 can join.

The members 218 of the communities 214 can utilize the set icon 806 to manage access of the community profile pages 263, depending on roles 1102 of the members 218. If the users who are viewing the community profile pages 263 are the members 218 of the communities 214, the community profile pages 263 display a check mark character, denoted as √, next to text "Member" in the upper right corner of the screens 308.

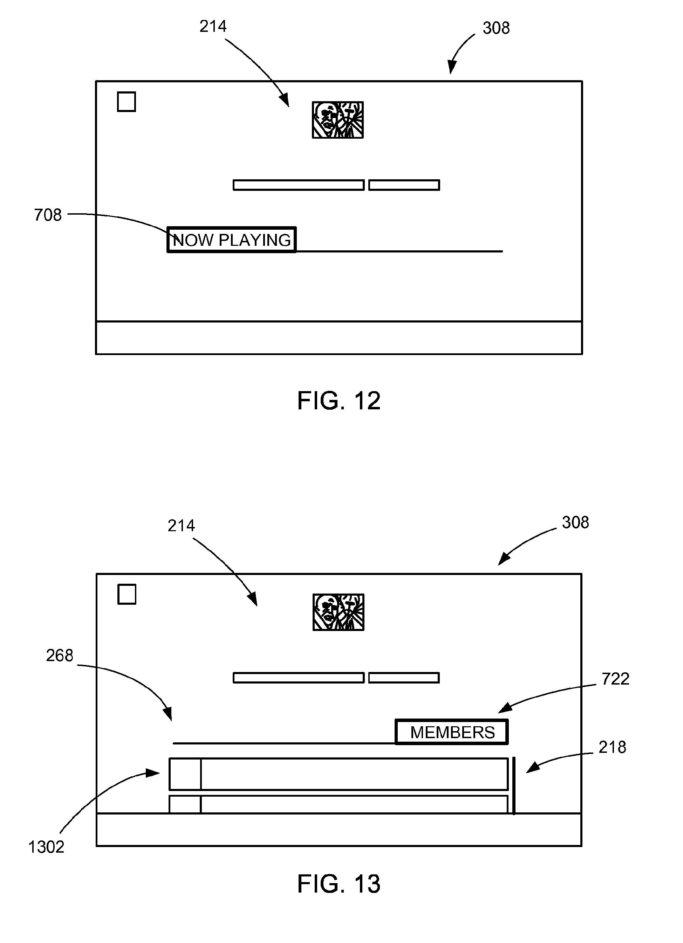

Referring now to FIG. 12, therein is shown an example of one of the screens 308 with the now playing option 708. The community profile pages 263 of FIG. 2 can present the now playing option 708 for the users to select to view the now playing page 712 of FIG. 7.

The now playing page 712 presents the parties 228 of FIG. 2 or the open-sessions 270 of FIG. 2 of the games 210 of FIG. 2 that are currently active. If there are none of the open-sessions 270 that are active in the communities 214, the notifications 230 of FIG. 2 can be presented on the screens 308 below the now playing option 708 so that the users may desire to start one of the open-sessions 270 and invite the friends to join the open-sessions 270. The notifications 230 can be generated by the notification functional area module 272 of FIG. 2.

Referring now to FIG. 13, therein is shown an example of one of the screens 308 with the member list option 722. The community profile pages 263 of FIG. 2 can present the member list option 722 so that the users can view the member list page 724 of FIG. 2. The member list page 724 shows the member lists 268 of the members 218 who have joined each of the communities 214. The member count 220 of FIG. 2 of the members 218 can be shown in the community profile pages 263. Member names 1302 of the members 218 can be presented below the member list option 722.

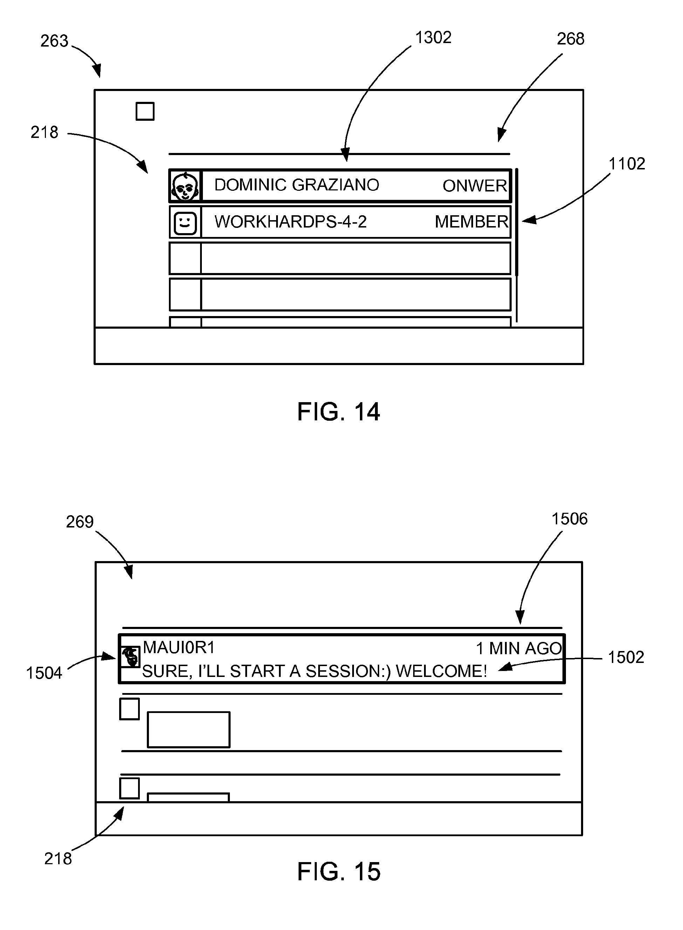

Referring now to FIG. 14, therein is shown an example of one of the member lists 268. The member lists 268 can be presented to show the member names 1302 of the members 218 after the member list option 722 of FIG. 7 is selected. The roles 1102 of the members 218 can be presented next to the member names 1302. The roles 1102 can include the community creators 250 of FIG. 2, the community moderators 252 of FIG. 2, and the members 218. The member count 220 of FIG. 2 of the members 218 can be shown in the community profile pages 263.

Referring now to FIG. 15, therein is shown an example of one of the community discussion walls 269 of the communities 214 of FIG. 2. The community discussion walls 269 include posts 1502 made by the members 218 in the communities 214. The posts 1502 are information from the members 218 who want to share with each other about the activities in the communities 214. The posts 1502 can be presented in a chronological order.

A most recent comment 1504 in the posts 1502 can be shown at the top of the community discussion walls 269. The most recent comment 1504 is one of the posts 1502 that is the newest post among all of the posts 1502. Timestamps 1506 of the posts 1502 can be shown next to or to the right of the posts 1502. The timestamps 1506 can include units of seconds, minutes, hours, days, or any other periods.

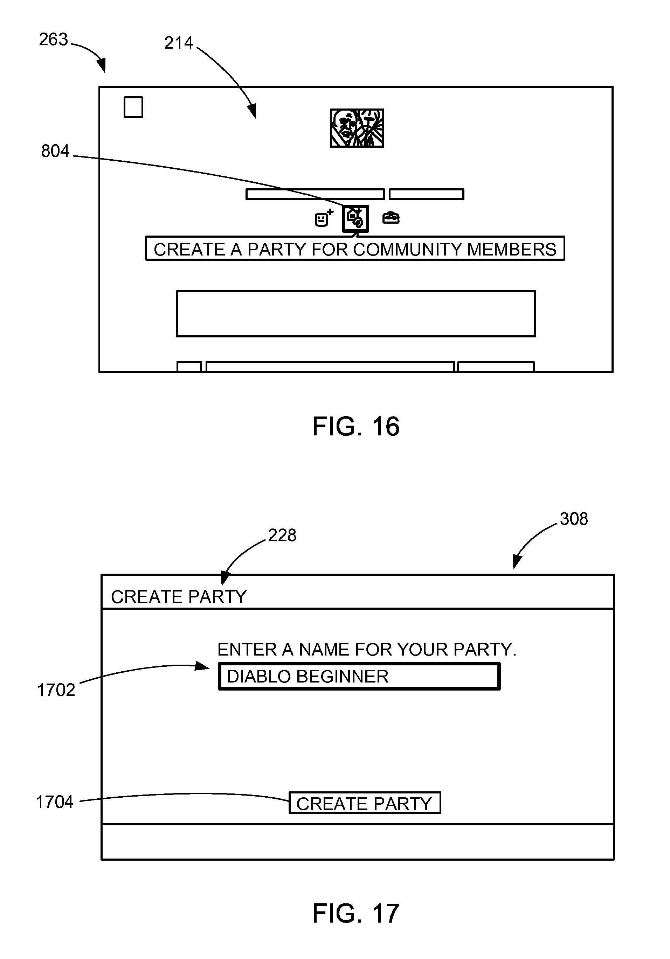

Referring now to FIG. 16, therein is shown the create icon 804 on the community profile pages 263. The create icon 804 can be utilized to create the parties 228 of FIG. 2 for the members 218 of FIG. 2 to participate in the communities 214.

Referring now to FIG. 17, therein is shown an example of one of the screens 308 for creation of the parties 228. The parties 228 can be created by the users entering party names 1702 of the parties 228 and selecting a create party option 1704. The members 218 of FIG. 2 can create the parties 228 that are public or that can be joined by any of the members 218. The parties 228 can also be presented to the members 218 in the communities 214 of FIG. 2.

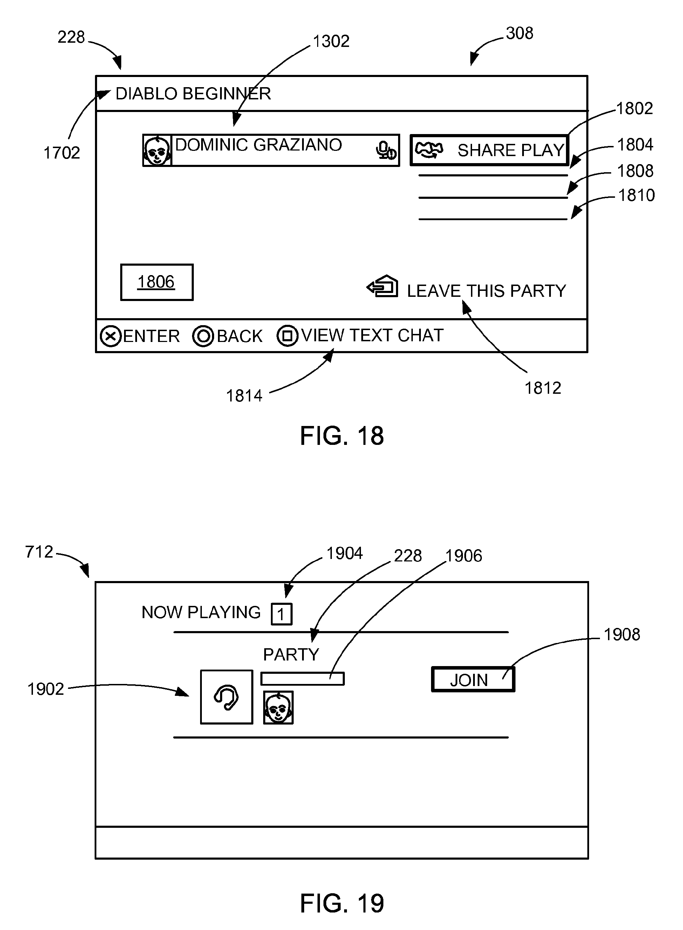

Referring now to FIG. 18, therein is shown an example of one of the parties 228. The party names 1702 of the parties 228 can be presented at the top of the screens 308. The member names 1302 of the members 218 of FIG. 2 can be presented along with the unique names 264 of FIG. 2 of the communities 214 of FIG. 2.

A share play option 1802 is presented for the members 218 to select. The share play option 1802 can be selected for the members to share the parties 228 that have been created with other members of the communities 214. An invite party option 1804 can be presented for the members 218 to invite the members 218 to join the parties 228.

Party settings 1806 associated with the parties 228 can be configured using a party setting option 1808. A list of other parties 229 of FIG. 2 can be viewed using a view another party option 1810. The members 218 can elect to leave the parties 228 by selecting a leave party option 1812. If the members 218 would like to view a text version of chats in the parties 228, the members 218 can select a view text chat option 1814.

Referring now to FIG. 19, therein is shown an example of the now playing page 712. The now playing option 708 of FIG. 7 can be utilized by the members 218 of FIG. 2 to view the now playing page 712 presented by the now playing module 278 of FIG. 2. The now playing page 712 can include presentation of videos 1902.

The now playing page 712 can include a now playing count 1904 of a number of the videos 1902 currently presented in the parties 228 as well as an elapsed time 1906 of each of the videos 1902. The now playing page 712 includes a join option 1908 for the members 218 to select after the members 218 select which of the videos 1902 to view.

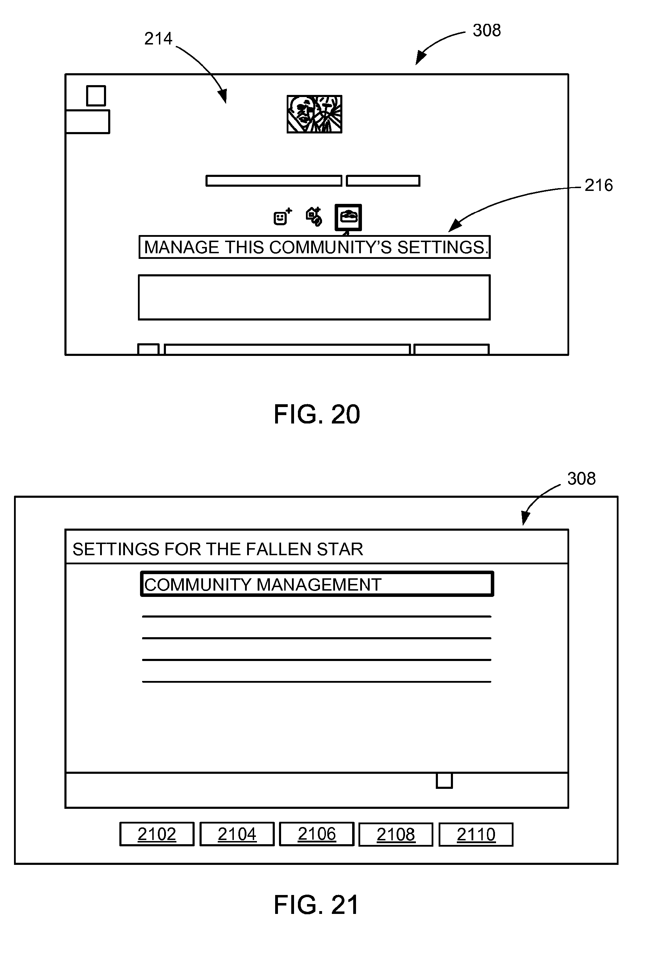

Referring now to FIG. 20, therein is shown a configuration of the control settings 216 of the communities 214. The control settings 216 can be managed or configured by the users to select the privacy setting options 402 of FIG. 4. The privacy setting options 402 can be configured to determine if the communities 214 are joinable by any of the users or joinable only upon request.

Referring now to FIG. 21, therein is shown an example of one of the screens 308 for management of the control settings 216 of FIG. 2. The control settings 216 are utilized for management of the communities 214 of FIG. 2. The community creators 250 of FIG. 2 and the community moderators 252 of FIG. 2 can perform various management functions using the control settings 216.

For example, the can block the members 218 of FIG. 2 from joining the communities 214. Also for example, the community creators 250 and the community moderators 252 can qualify or approve registration requests 2102 from the users to join the communities 214.

The registration requests 2102 can be generated by the registration module 292 of FIG. 2. The registration requests 2102 can be acknowledged by the registration module 292 as approved by the community creators 250 or the community moderators 252. The registration requests 2102 can be acknowledged by sending the notifications 230 of FIG. 2 to the users who submitted the registration requests 2102.

The control settings 216 can include the unique names 264 of FIG. 2 and the privacy setting options 402 of FIG. 4 to provide the permissions for sharing of the communities 214. The control settings 216 can include the game titles 236 of FIG. 2, the community profile pictures 265 of FIG. 2, and the community background images 266 of FIG. 2 of the communities 214. The control settings 216 can include the community descriptions 267 of FIG. 2 and preferences. The preferences can include the primary languages 232 of FIG. 2 that the communities 214 prefer to use and the time zones 212 of FIG. 2 of the communities 214.

The control settings 216 can be utilized to manage all different configuration parameters of the communities 214. All of the control settings 216 of the communities 214 that were first created for the communities 214 can be adjusted or updated as appropriate by the community creators 250, the community moderators 252, and the members 218 of the communities 214.

The roles 1102 of FIG. 11 of the community creators 250, the community moderators 252, and the members 218 are described below. The roles 1102 are utilized to determine special or predetermined rights for the community creators 250, the community moderators 252, and the members 218.

There can be only one of the community creators 250 for each of the communities 214. There can be any number of the community moderators 252. The communities 214 can include the predetermined number of the members 218.

The community creators 250 can have information management functions 2104 of the communities 214. The community creators 250 are given rights or authorities with the information management functions 2104 for management of the communities 214.

The information management functions 2104 include abilities to edit the unique names 264 and the privacy setting options 402 and to change game tags. The information management functions 2104 include abilities to edit the community profile pictures 265, the community background images 266, the community descriptions 267, the time zones 212, and the primary languages 232. The game tags refer to the games 210 of FIG. 2 associated with the communities 214.

The community creators 250 can have member management functions 2106 over the members 218 of the communities 214. The community creators 250 are given rights or authorities with the member management functions 2106 for control of the members 218 in the communities 214. The member management functions 2106 include abilities to give or assign ownerships of the communities 214, demote the roles 1102 of the members 218, and promote the members 218.

The member management functions 2106 include abilities of the community creators 250 to self-demote themselves, kick or remove the members 218 out of the communities 214, and block or unblock any of the players or any of the members 218 of the communities 214. For example, the community creators 250 block or unblock any of the members 218 of the communities 214 from joining or participating in the parties 228 of FIG. 2. The member management functions 2106 include abilities to approve the registration requests 2102 as appropriate based on the privacy setting options 402 and invite the users in the social gaming network 104 of FIG. 1 to join the communities 214.

When the community creators 250 self-demote, the community creators 250 can give ownership to another of the members 218 in the communities 214 or another of the users of the social gaming network 104. The community creators 250 can kick any one of the members 218 out of the communities 214. The community creators 250 can block or unblock any of the members 218 of the communities 214.

The community creators 250 can have content management functions 2108. The community creators 250 are given rights or authorities with the content management functions 2108 for control of shared contents 2110 in the communities 214. The shared contents 2110 include information that is exchanged among the members of the communities 214. The shared contents 2110 include media, messages, and other contents posted by the members 218 of the communities 214 with which the shared contents 2110 are associated.

The content management functions 2108 include abilities to delete the shared contents 2110. The content management functions 2108 include abilities to delete the communities 214.

The community moderators 252 can have the information management functions 2104. The community moderators 252 are given rights or authorities with the information management functions 2104 for management of the communities 214. The information management functions 2104 include abilities to edit the community profile pictures 265, the community background images 266, the community descriptions 267, the time zones 212, and the primary languages 232.

The community moderators 252 can have the member management functions 2106. The community moderators 252 are given rights or authorities with the member management functions 2106 for control of the members 218 in the communities 214. The member management functions 2106 include abilities of the community moderators 252 to self-demote themselves, and kick or remove the members 218 out of the communities 214.

The member management functions 2106 include abilities to kick or remove only the members 218 who have just regular memberships. The regular memberships apply to the members 218 who are not the community creators 250 and the community moderators 252.

The member management functions 2106 include abilities to block or unblock only the members 218 who have just the regular memberships. For example, the community moderators 252 can block or unblock any of the members 218 of the communities 214 from joining or participating in the parties 228.

The member management functions 2106 include abilities to approve the registration requests 2102 as appropriate based on the privacy setting options 402. The member management functions 2106 include abilities to invite the users in the social gaming network 104 to join the communities 214.

The community moderators 252 can have the content management functions 2108. The community creators 250 are given rights or authorities with the content management functions 2108 for control of the shared contents 2110 in the communities 214.

The content management functions 2108 include abilities to delete only the shared contents 2110 that have been created by the members 218 with the regular memberships. The community moderators 252 are given rights or authorities to leave the communities 214.

The members 218 can have the member management functions 2106. The members 218 are given rights or authorities with the member management functions 2106 for control of themselves in the communities 214. The member management functions 2106 include abilities to invite the users in the social gaming network 104 to join the communities 214. The members 218 are given rights or authorities to leave the communities 214.

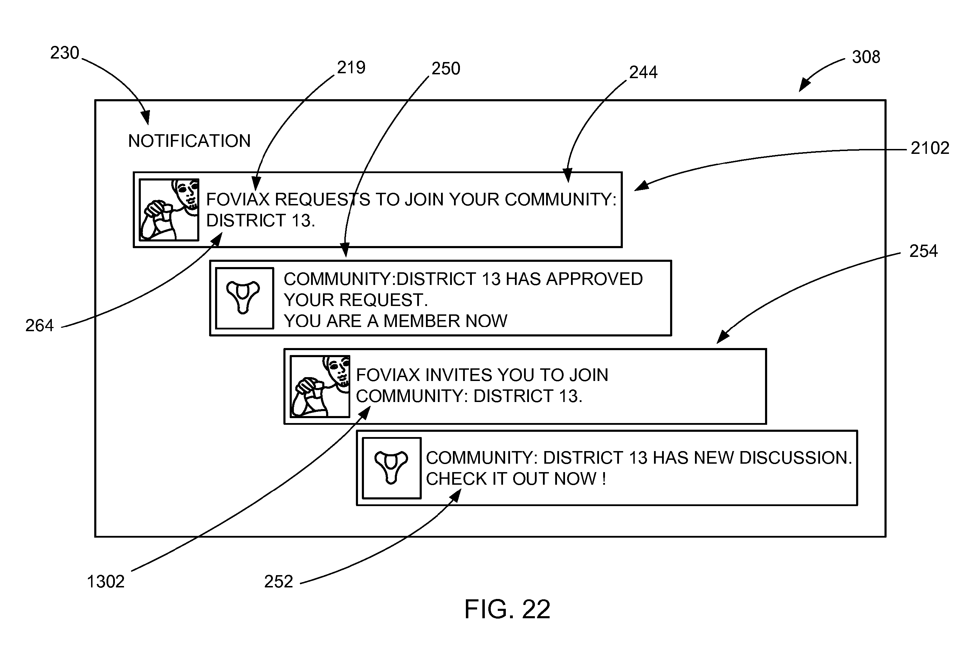

Referring now to FIG. 22, therein is shown an example of one of the screens 308 with the notifications 230. The notifications 230 provide a mechanism for the users of the social gaming network 104 of FIG. 1 to communicate. The notifications 230 allow the users to submit the registration requests 2102 to join the communities 214 of FIG. 2.

The members 218 of FIG. 2 can send the registration requests 2102 to the community creators 250 and the community moderators 252 when the members 218 would like to join the communities 214. The notifications 230 include the member names 1302 of the members 218 who make the registration requests 2102. The notifications 230 include the unique names 264 of the communities 214.

The community creators 250 or the community moderators 252 can send the notifications 230 to approve or disapprove the registration requests 2102. The notifications 230 can inform the members 218 that the members 218 are now participants of the communities 214 if the registration requests 2102 have been approved. The notifications 230 include the unique names 264 of the communities 214 that approve the registration requests 2102.

The members 218 of the communities 214 can send the notifications 230 to other users or players in the social gaming network 104 and invite them to join the communities 214. The notifications 230 include the member names 1302 of the members 218 that sends the notifications 230 and the unique names 264 of the communities 214 for which the invitations 254 are sent.

The communities 214 can send the notifications 230 to the members 218 of the communities 214 indicating that there are new discussions in the community discussion walls 269 of FIG. 2. The notifications 230 can inform the members 218 of the parties 228 of FIG. 2 and the open-sessions 270 of FIG. 2 so that the members 218 can further inquire and participate. The notifications 230 can be presented for the activities within the communities 214.

The notifications 230 can be presented on the game consoles 102 of FIG. 1. The notifications 230 can include the registration requests 2102 to join the communities 214, whether or not the registration requests 2102 are approved, and the invitations 254 sent to the users to join the communities 214.

The notifications 230 can include a number of new messages in live threads from the communities 214 that the members 218 have recently visited. For example, a number of days that the members 218 have recently visited the communities 214 may be 30 days, during which the communities 214 have been visited daily.

The notifications 230 can include the shared contents 2110 of FIG. 2 that have been removed. The shared contents 2110 removed can include the user-generated message contents 244. The shared contents 2110 can be removed by global moderation teams including the community creators 250 and the community moderators 252.

The notifications 230 can include pop-ups, which are dialog boxes or windows that are interactively presented on the screens 308. The pop-ups can be controlled by the communities 214.

The users can control pop-up notifications, which appear as brief overlay boxes in upper left portions of the screens 308. The users can turn this feature off or on for the entirety of the communities 214 (not per-community at this time). This system is separate from a notification system in that the users can still receive the notifications 230 about the communities 214 when this is turned off.

The notifications 230 can be generated for the registration requests 2102 to the community creators 250 and the community moderators 252. The notifications 230 can be generated and sent to the community creators 250 and the community moderators 252 about the number of the new messages in the live threads from the communities 214 that have recently visited.

The notifications 230 can be generated and sent to the community creators 250 and the community moderators 252 when the shared contents 2110 have been removed by the community creators 250 or the community moderators 252. The notifications 230 can be generated and sent to the community creators 250 and the community moderators 252 regarding control of the notifications 230 including the pop-ups.

The notifications 230 can be generated and sent to the users in response to the registration requests 2102 of the users and whether or not the registration requests 2102 are approved. The notifications 230 can be generated and sent to the members 218 about the number of the new messages in the live threads from the communities 214 that have recently visited. The notifications 230 can be generated and sent to the members 218 regarding control of the notifications 230 including the pop-ups.

The notifications 230 can be generated and sent to non-members 219 of the communities 214. The non-members 219 are the users who have not joined the communities 214. The notifications 230 can be generated and sent to the non-members 219 for the invitations 254 to join the communities 214. The notifications 230 can be generated and sent to the non-members 219 regarding control of the notifications 230 including the pop-ups.

The notifications 230 can be condensed. The condensation of the notifications 230 allow the same types of the notifications 230 to be collapsed so that only different types of the notifications 230 are presented. When the notifications 230 are condensed, each of the notifications 230 of the same types does not get presented but only the types of the notifications 230 are presented and a total number of the notifications 230 of each of the types can be presented.

Only the notifications 230, which are associated with the registration requests 2102 submitted for approval and the number of the new messages in the live threads from the communities 214 that have recently visited, get condensed. The notifications 230 that associate with the pop-ups may not get condensed.

The notifications 230 associated with the registration requests 2102 can be linked to or controlled by pages or information related to the control settings 216 of FIG. 2 utilized for management of the members 218 and the communities 214. The notifications 230 associated with whether or not the registration requests 2102 are approved, with the invitations 254, with the number of the new messages in the live threads, and with the shared contents 2110 can be linked to or controlled by the community profile pages 263 of FIG. 2.

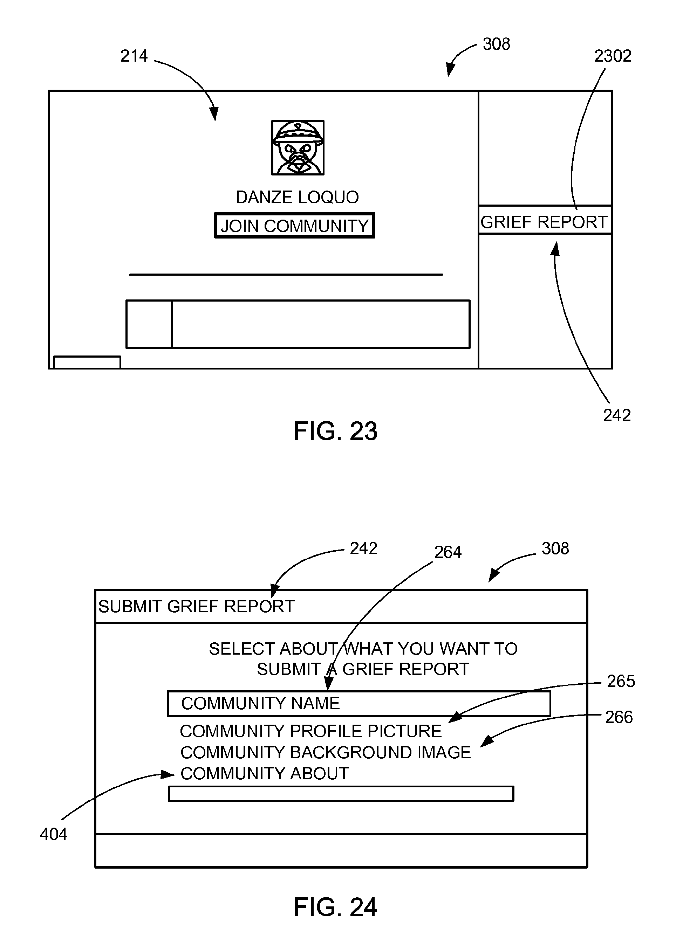

Referring now to FIG. 23, therein is shown an example of one of the screens 308 with a grief report option 2302. The grief report option 2302 provides a mechanism to generate the grief reports 242 in the communities 214 when the user-generated message contents 244 of FIG. 2 are inappropriate. The grief report option 2302 can be presented in the community profile pages 263 of FIG. 2.

Referring now to FIG. 24, therein is shown an example of one of the screens 308 for generation of the grief reports 242. All of the user-generated message contents 244 of FIG. 2 in the communities 214 of FIG. 2 can be reportable by the grief reports 242.

The grief reports 242 can be generated by the members 218 of FIG. 2 selecting what to submit for the grief reports 242. The members 218 can select or specify the unique names 264, the community profile pictures 265, the community background images 266, or the mission statements 404 to submit for the grief reports 242.

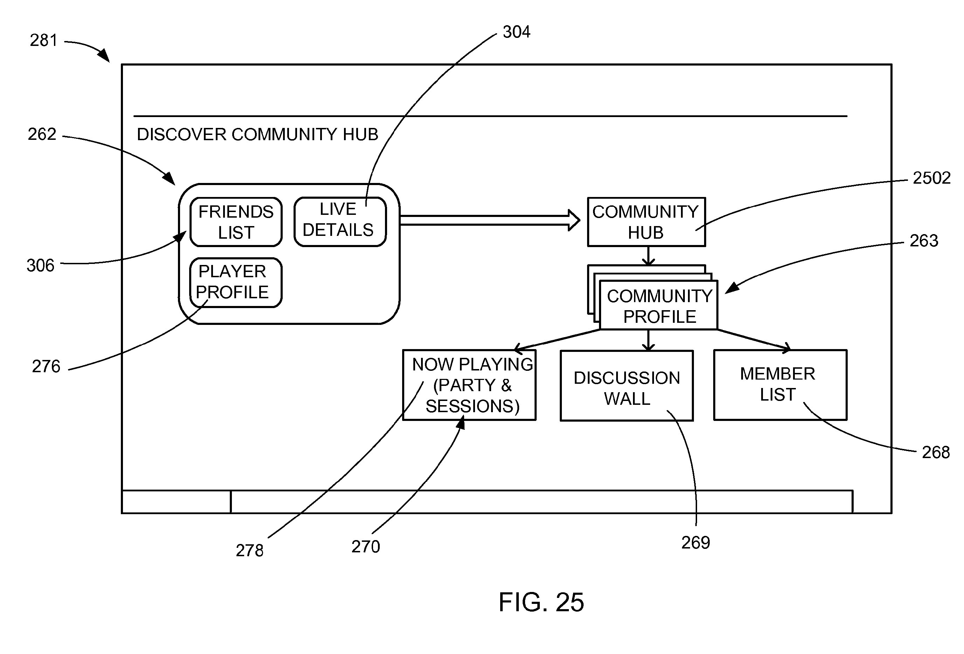

Referring now to FIG. 25, therein is shown a detailed block diagram of the community hub module 281. The community hub module 281 provides a mechanism to discover a community hub 2502, which provides access to the communities 214 of FIG. 2. The communities 214 can be accessed with the entry points 262 to the community hub 2502.

The entry points 262 include the live details widget 304, the friend app 306, and the member profiles 276. The live details widget 304 includes information about the games 210 of FIG. 2 currently taking place at the time the members 218 of FIG. 2 are using the community hub module 281.

The friend app 306 provides a list of the friends of the members 218 so that the members 218 can search for the activities associated with the communities 214 in which the friends actively participate. The member profiles 276 include details about the members 218 of the communities 214 and which of the communities 214 the members 218 are active participants.

The community hub 2502 can provide the users an access to the communities 214. The access to the communities 214 can be determined or selected by performing a search with the entry points 262 based on the unique names 264 of FIG. 2, the community profile pictures 265 of FIG. 2, the community background images 266 of FIG. 2, the time zones 212 of FIG. 2, the primary languages 232 of FIG. 2, the community descriptions 267 of FIG. 2, the game titles 236 of FIG. 2, the member lists 268, or a combination thereof.

After the communities 214 are selected by the community hub 2502, the users can view the community profile pages 263 of the communities 214. Then, the users can select the now playing option 708 of FIG. 7.

When the now playing option 708 is selected, the now playing page 712 of FIG. 7 can be presented by the now playing module 278. The now playing page 712 can present the parties 228 of FIG. 2 and the open-sessions 270 that are available for the members 218 to access. The users can select to view the community discussion walls 269 for discussions of the games 210. The users can select the member list option 722 of FIG. 7 view the member lists 268 of the members 218 who have joined each of the communities 214.

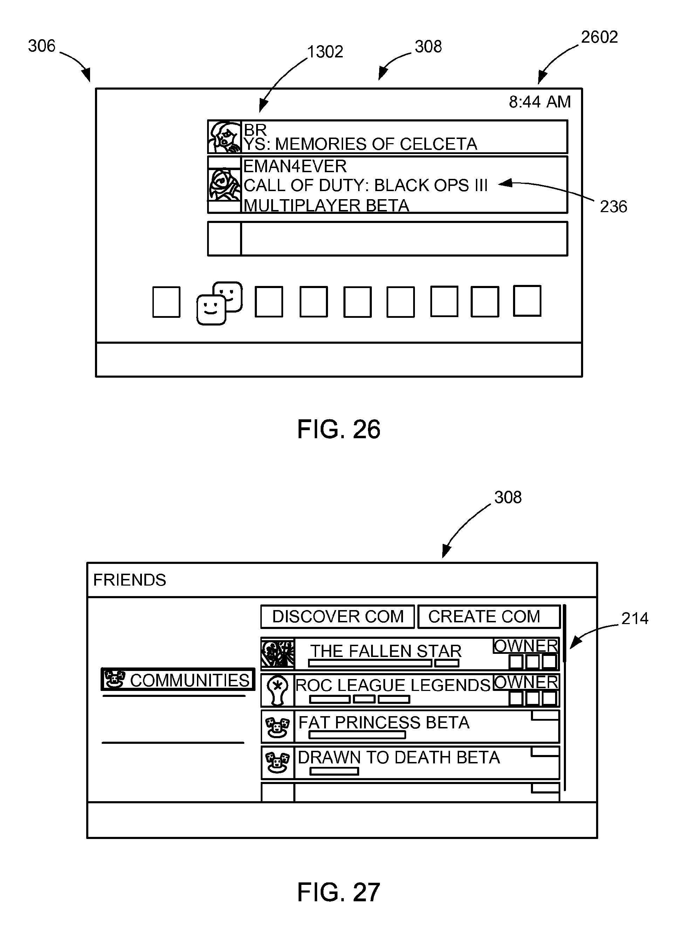

Referring now to FIG. 26, therein is shown an example of the friend app 306. The friend app 306 can be selected using one of icons shown in the bottom of the screens 308. The communities 214 of FIG. 2 can be discovered through the friend app 306. A number of the friends can be presented on the screens 308. The member names 1302 of the friends can also be presented along with the game titles 236 associated with the communities 214 of which the friends are participants. A time of day 2602 can be presented on the upper right corner of the screens 308. The time of day 2602 is a specific time of a day.

Referring now to FIG. 27, therein is shown an example of one of the screens 308 for discovery of the communities 214 based on the friend app 306 of FIG. 3. The list of the communities 214 can be presented along with the number of the communities 214 that the friends have joined. The users can select to create the communities 214 if the users are the community creators 250 of FIG. 2 using the master accounts 248 of FIG. 2.

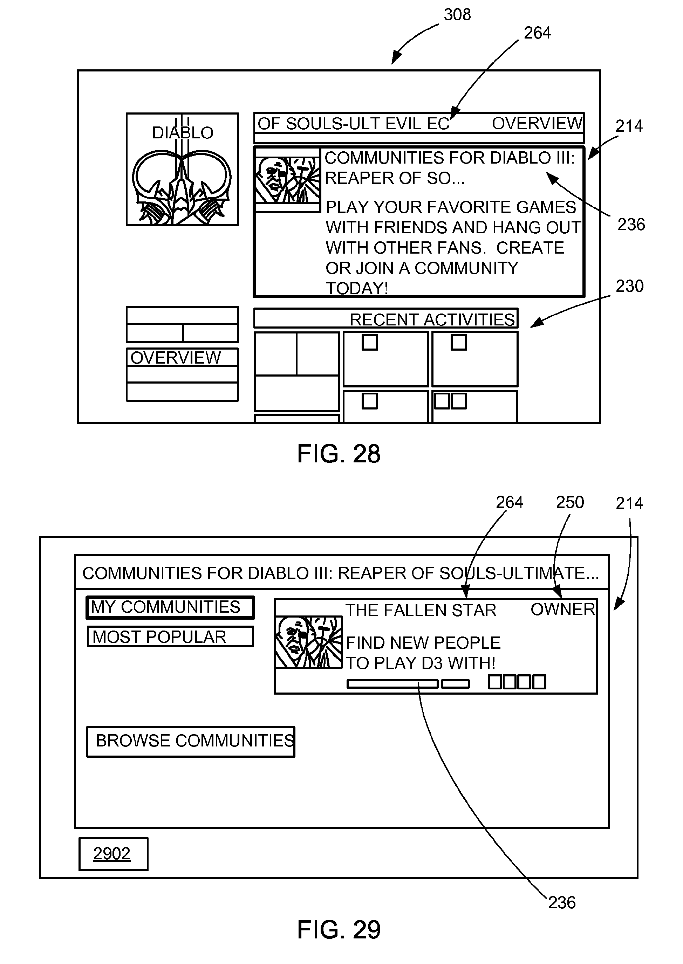

Referring now to FIG. 28, therein is shown an example of one of the screens 308 for discovery of the communities 214 based on the live details widget 304 of FIG. 2. The live details widget 304 presents the game titles 236 and the unique names 264 associated with the communities 214.

The community creators 250 of FIG. 2, the community moderators 252 of FIG. 2, or the members 218 of FIG. 2 can submit the notifications 230 to the users. For example, the notifications 230 can include a message to the users to play favorite games with friends and hangout with other fans. Also for example, the notifications 230 can include another message for the users to create or join the communities 214.

The live details widget 304 can indicate a number of memberships available for registration, a number of the community creators 250, and a number of the members 218 that have joined. The live details widget 304 can present the activities that are recent and actively participated by the members 218 of the communities 214. The activities that are recent include newest actions or events among all actions or all events associated with the communities 214.

Referring now to FIG. 29, therein is shown an example of one of the game titles 236. The game titles 236 can be presented along with the unique names 264 of the communities 214. A number of the communities 214 are associated with the game titles 236.

The communities 214 that are trending can also be presented for the game titles 236. The users or the members 218 of FIG. 2 can browse or view the communities 214 associated with the game titles 236 presented. The member names 1302 of FIG. 13 of the community creators 250 can also be presented. Member pictures 2902 of the members 218 can be presented as thumbnail pictures.

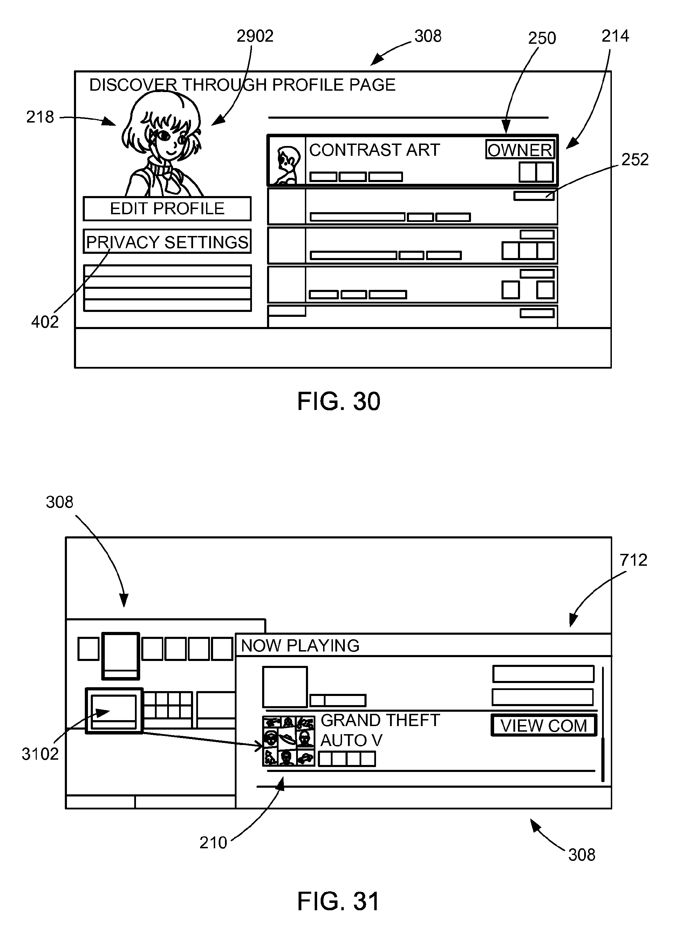

Referring now to FIG. 30, therein is shown an example of one of the screens 308 for discovery of the communities 214 based on the member profiles 276 of FIG. 2. All of the communities 214 associated with the member profiles 276 can be presented. A number of the communities 214 associated with the member profiles 276 can also be presented.

The member pictures 2902 of the members 218 can be presented. The members 218 can edit the member profiles 276 if the member profiles 276 are for or belong to the master accounts 248 of FIG. 2 or the sub-accounts 224 of FIG. 2 of the members 218. The members 218 can view or edit the privacy mode of the privacy setting options 402 of the communities 214 if the members 218 are the community creators 250 or the community moderators 252, who are the only users permitted to edit the privacy setting options 402.

The members 218 can view an overview or the community descriptions 267 of FIG. 2 of the communities 214. The members 218 can view the activities that are the most recent as described above. The members 218 can view the friends who have joined the communities 214. The members 218 can view the communities 214 that are associated with the game titles 236 of FIG. 2 presented on the screens 308.

Referring now to FIG. 31, therein is shown an example of one of the screens 308 for discovery of the communities 214 of FIG. 2 based on the now playing option 708 of FIG. 7. The now playing option 708 enables the users or the members 218 of FIG. 2 to search for the communities 214 through the "What's New" menu on the game consoles 102 of FIG. 1.

When the users select the "What's New" menu, a number of small windows 3102 are presented below the "What's New" menu. Each of the small windows 3102 shown on the screens 308 includes a size smaller than a size of one of the screens 308. One of the small windows 3102 shows a number of the games 210 that are currently played as the users are viewing the small windows 3102.

When the users select one of the small windows 3102 that present the games 210 that are currently played, the now playing page 712 can be fully presented on the screens 308. The now playing page 712 is fully presented when the now playing page 712 includes a size equal to a size of one of the screens 308.

The users can select one of the games 210 that are currently played and shown on the now playing page 712. The users can select one of the games 210 and then view a list of the communities 214 that are associated with the one of the games 210 just selected. The users can view the one of the games 210 in an online store. The users can request the community creators 250 of FIG. 2 or the community moderators 252 of FIG. 2 to enable the users to watch the one of the games 210.

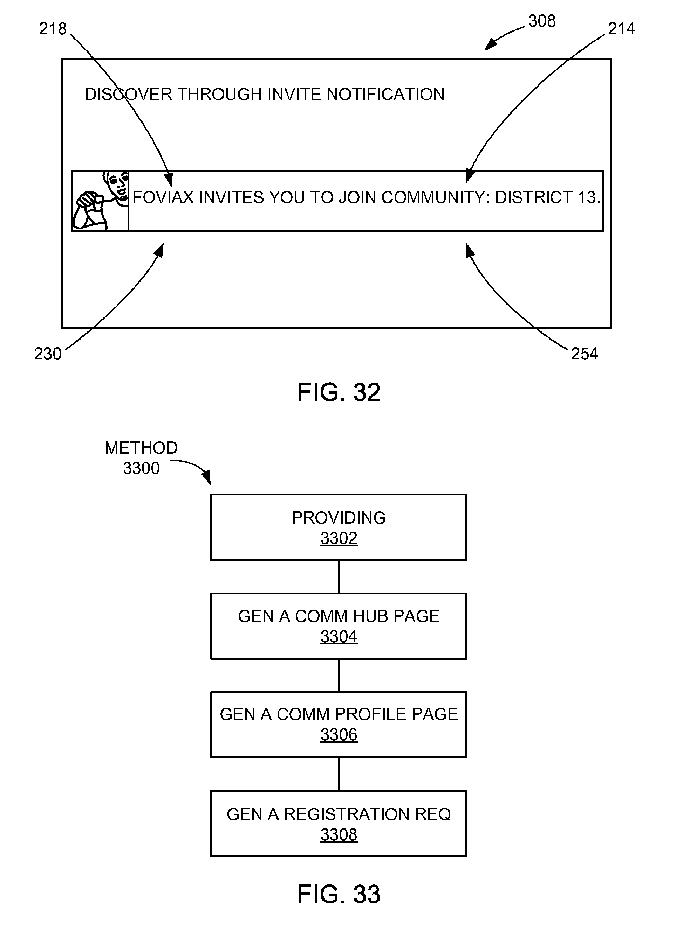

Referring now to FIG. 32, therein is shown an example of one of the screens 308 for discovery of the communities 214 based on the invitations 254. The invitations 254 can be generated and sent from any of the members 218 of the communities 214 to other users in the social gaming network 104 of FIG. 1.

The invitations 254 can be sent by the notifications 230 from the members 218 to other users in the social gaming network 104. The other users can submit the registration requests 2102 of FIG. 21 to the community creators 250 of FIG. 2 or the community moderators 252 of FIG. 2 for approval before the other users can be able to join the communities 214.

Referring now to FIG. 33, therein is shown a flow chart of a method 3300 of operation of an electronic processing system in a further embodiment of the present invention. The method 3300 includes: providing an entry point for utilizing a community feature in a social gaming network in a block 3302; generating a community hub page of a community based on the entry point for presenting on a screen in a block 3304; generating a community profile page of the community presented on the community hub page in a block 3306; and generating a registration request based on the community profile page for joining the community with a shared interest to play a game in the social gaming network in a block 3308.

Thus, it has been discovered that the electronic processing system 100 of FIG. 1 of the embodiments of the present invention furnish important and heretofore unknown and unavailable solutions, capabilities, and functional aspects for the electronic processing system 100 with the social network mechanism. The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization.

Another important aspect of the embodiments of the present invention is that it valuably supports and services the historical trend of reducing costs, simplifying systems, and increasing performance.

These and other valuable aspects of the embodiments of the present invention consequently further the state of the technology to at least the next level.

While the invention has been described in conjunction with a specific best mode, it is to be understood that many alternatives, modifications, and variations can be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

Various further aspects and features of the example embodiments are defined in the appended claims. The following number paragraphs provide further example aspects and features of example embodiments.
Paragraph 1. A method of operation of an electronic processing system comprising:
   providing an entry point for utilizing a community feature in a social gaming network;
   generating a community hub page of a community based on the entry point for presenting on a screen;
   generating a community profile page of the community presented on the community hub page, the community profile page includes a unique name of the community; and
   generating a registration request based on the community profile page for joining the community with a shared interest to play a game in the social gaming network.
Paragraph 2. The method as claimed in claim 1 wherein:
   generating the community profile page includes generating the community profile page with a game title of the game associated with the community; and
   generating the registration request includes generating the registration request based on the game title presented on the community profile page.
Paragraph 3. The method as claimed in claim 1 wherein:
   generating the community profile page includes generating the community profile page with a member list of member names associated with the community; and
   generating the registration request includes generating the registration request based on the member names presented on the community profile page.
Paragraph 4. The method as claimed in claim 1 further comprising:
   creating a user-generated message content for the community; and
   generating a grief report for the user-generated message content based on a profanity filter.
Paragraph 5. The method as claimed in claim 6 further comprising:
   generating an invitation to join the community based on the shared interest; and
   acknowledging the registration request only by the invitation with a privacy setting option disabled for sharing the community.

## Claims

1. A method of operation of an electronic processing system comprising:
providing an entry point for utilizing a community feature in a social gaming network;
generating a community hub page of a community based on the entry point for presenting on a screen;
generating a community profile page of the community presented on the community hub page; and
generating a registration request based on the community profile page for joining the community with a shared interest to play a game in the social gaming network.

2. The method as claimed in claim 1 wherein generating the community profile page includes generating the community profile page with a game title of the game associated with the community.

3. The method as claimed in claim 1 wherein generating the community profile page includes generating the community profile page with a member list of member names associated with the community.

4. The method as claimed in claim 1 further comprising:
creating a user-generated message content for the community; and
generating a grief report for the user-generated message content.

5. The method as claimed in claim 1 further comprising generating an invitation to join the community based on the shared interest.

6. An electronic processing system comprising:
an entry module for providing an entry point for utilizing a community feature in a social gaming network;
a community hub module, coupled to the entry module, for generating a community hub page of a community based on the entry point for presenting on a screen;
a community profile module, coupled to the community hub module, for generating a community profile page of the community presented on the community hub page; and
a registration module, coupled to the community profile module, for generating a registration request based on the community profile page for joining the community with a shared interest to play a game in the social gaming network.

7. The system as claimed in claim 6 wherein the community profile module is for generating the community profile page with a game title of the game associated with the community.

8. The system as claimed in claim 6 wherein the community profile module is for generating the community profile page with a member list of member names associated with the community.

9. The system as claimed in claim 6 wherein the community profile module is for creating a user-generated message content for the community and generating a grief report for the user-generated message content.

10. The system as claimed in claim 6 wherein the community profile module includes an invitation module, coupled to the community hub module, for generating an invitation to join the community based on the shared interest.

11. The system as claimed in claim 6 wherein the community profile module is for generating the community profile page having a unique name of the community.

12. The system as claimed in claim 11 wherein:
the community profile module is for generating the community profile page with a game title of the game associated with the community; and
the registration module is for generating the registration request based on the game title presented on the community profile page.

13. The system as claimed in claim 11 wherein:
the community profile module is for generating the community profile page with a member list of member names associated with the community; and
the registration module is for generating the registration request based on the member names presented on the community profile page.

14. The system as claimed in claim 11 wherein:
the community profile module is for creating a user-generated message content for the community; and
the registration module is for generating a grief report for the user-generated message content based on a profanity filter.

15. The system as claimed in claim 11 wherein:
the community profile module includes an invitation module, coupled to the community hub module, for generating an invitation to join the community based on the shared interest; and
the registration module is for acknowledging the registration request only by the invitation with a privacy setting option disabled for sharing the community.
